# EUROPÄISCHE PATENTSCHRIFT

(11) **EP 1 987 704 B1**
(45) Veröffentlichungstag und Bekanntmachung des Hinweises auf die Patenterteilung: **06.10.2010**
(21) Anmeldenummer: 07726341.6
(22) Anmeldetag: 12.02.2007
(51) Int. Cl.: H05B 41/28

(54) **HOCHSETZTREIBER MIT MINIMALER SCHALTFREQUENZ**
STEP-UP DRIVER WITH MINIMAL SWITCHING FREQUENCY
CONVERTISSEUR ÉLÉVATEUR PRÉSENTANT UNE FRÉQUENCE DE COMMUTATION MINIMALE

(30) Priorität: 21.02.2006 DE 202006002761 U
(43) Veröffentlichungstag der Anmeldung: 05.11.2008
(73) Patentinhaber: Osram Gesellschaft mit beschränkter Haftung, 81543 München (DE)
(72) Erfinder: FISCHER, Klaus, 86316 Friedberg (DE); KREITTMAYR, Josef, 86399 Bobingen (DE)
(86) Internationale Anmeldenummer: PCT/EP2007/051319
(87) Internationale Veröffentlichungsnummer: WO 2007/096263

(56) Entgegenhaltungen:
- EP-A2- 0 805 548
- US-A- 5 532 528
- US-A- 5 644 214
- US-A1- 2004 263 140

## Beschreibung

### Technisches Gebiet

Die vorliegende Erfindung bezieht sich auf ein elektronisches Vorschaltgerät mit einem Hochsetzsteller zum Betrieb einer Entladungslampe, beispielsweise einer Niederdruckentladungslampe.

### Stand der Technik

Elektronische Vorschaltgeräte zum Betrieb von Entladungslampen sind in vielfältigen Ausführungen bekannt. I.d.R. enthalten sie eine Gleichrichterschaltung zur Gleichrichtung einer Wechselspannungsversorgung und Aufladen eines häufig als Zwischenkreiskondensator bezeichneten Kondensators. Die an diesem Kondensator anliegende Gleichspannung dient zur Versorgung eines Wechselrichters bzw. Inverters (im Folgenden Inverter), der die Entladungslampe betreibt. Grundsätzlich erzeugt ein Inverter aus einer gleichgerichteten Wechselspannungsversorgung oder einer Gleichspannungsversorgung eine Versorgungsspannung für die mit hochfrequentem Strom zu betreibende Entladungslampe. Ähnliche Vorrichtungen sind auch für andere Lampentypen bekannt, beispielsweise in Form von elektronischen Transformatoren für Halogenlampen.

Hochsetzstellerschaltungen zur Netzstromoberschwingungsreduzierung von Vorschaltgeräten für Entladungslampen sind an sich bekannt. Sie weisen eine Speicherdrossel, ein Schaltelement, eine Diode und einen Zwischenkreiskondensator auf. Der Zwischenkreiskondensator versorgt beispielsweise eine Entladungslampe über eine Inverterschaltung.

Eine solche Hochsetzstellerschaltung ist auch als Leistungsfaktorkorrekturschaltung bekannt, und wird z.B. im US2004/0263140 und US55232528 offenbart.

### Darstellung der Erfindung

Der Erfindung liegt das technische Problem zugrunde, ein verbessertes elektronisches Vorschaltgerät mit einem Hochsetzsteller anzugeben.

Die Erfindung betrifft ein elektronisches Vorschaltgerät für eine Entladungslampe mit einem Hochsetzsteller, welcher eine Speicherdrossel, eine Diode, einen Zwischenkreiskondensator und ein Schaltelement aufweist, dadurch gekennzeichnet, dass es dazu ausgelegt ist, das Schaltelement im Hochsetzsteller beim Erreichen eines maximalen Stromwertes des durch das Schaltelement fließenden Stromes auszuschalten, und dass es eine Halteschaltung mit einem Zeitglied aufweist, welche dazu ausgelegt ist, das Zeitglied bei einem Ausschalten des Schaltelementes zu setzen, und das Schaltelement einzuschalten, wenn eine durch das Zeitglied bestimmte Zeit abgelaufen ist.

Bevorzugte Ausgestaltungen der Erfindung sind in den abhängigen Ansprüchen angegeben und werden im Folgenden näher erläutert.

Für den Betrieb eines Hochsetzstellers ist es erforderlich, dass das Schaltelement im Hochsetzsteller wiederholt ein- und ausgeschaltet wird. Die Erfindung beruht auf der Idee, dass sich ein Zeitglied als Indikator für die Einschaltzeitpunkte des Schaltelementes eignen kann. Weiter beruht die Erfindung auf der Idee, dass das Zeitglied auch eine bestimmte Zeit vorgibt, in der das Schaltelement ausgeschaltet bleibt, wenn nicht ein zuvor bestimmtes Ereignis auftritt (siehe Ausführungen zu Anspruch 2).

Das Schaltelement sorgt im eingeschalteten Zustand für einen ansteigenden Stromfluss in der Speicherdrossel bis zu einem einstellbaren maximalen Wert. Dabei wird die Speicherdrossel aufmagnetisiert. Das erfindungsgemäße elektronische Vorschaltgerät ist so ausgelegt, dass der Strom durch die Speicherdrossel, bei eingeschaltetem Schaltelement, etwa mittels eines Mess-(Shunt-)Widerstandes, erfasst und beim Erreichen des maximalen Werts das Schaltelement ausgeschaltet wird. Die Diode leitet nach dem Ausschalten des Schaltelementes den in der Speicherdrossel eingeprägten Strom in den Zwischenkreiskondensator. Dieser Strom nimmt mit der Zeit ab. Wird der Hochsetzsteller im sog. "discontinuous mode" betrieben, so wird die Speicherdrossel vollständig abmagnetisiert, so dass kein Strom mehr durch diese fließt, und die in Serie geschaltete Diode sperrt. Das elektronische Vorschaltgerät ist so ausgelegt, dass das Zeitglied beim Ausschalten des Schaltelementes gesetzt wird und das Schaltelement erst nach einer durch das Zeitglied vorbestimmten Zeit über die Halteschaltung wieder eingeschaltet wird. Der Hochsetzsteller kann also mit einer durch das Zeitglied wesentlich mitbestimmten Frequenz betrieben werden.

Die Halteschaltung ist nicht nur dazu ausgelegt, das Schaltelement im Hochsetzsteller im Anschluss an die durch das Zeitglied vorgegebene Zeit einzuschalten, sondern auch dazu, das Schaltelement für diese Dauer ausgeschaltet zu halten. Das kann bei Betriebsstörungen wünschenswert sein, etwa wenn Netzüberspannungen an dem elektronischen Vorschaltgerät anliegen, um ein etwa mögliches unkontrolliertes Schalten des Schaltelementes zu verhindern.

Bei bevorzugten Ausgestaltungen der Erfindung kann die Halteschaltung das Schaltelement auch aufgrund von innerhalb des elektronischen Vorschaltgerätes erzeugten Signalen einschalten (siehe unten).

Vorzugsweise ist das elektronische Vorschaltgerät zusätzlich dazu ausgelegt, im Anschluss an die Abmagnetisierung der Speicherdrossel das Schaltelement des Hochsetzstellers einzuschalten, also im "discontinuous mode" zu arbeiten. Im Anschluss an die Abmagnetisierung der Speicherdrossel sperrt die Hochsetzstellerdiode, so dass durch die Speicherdrossel kein Strom mehr fließt und das Potenzial zwischen der Hochsetzstellerdiode und der Speicherdrossel nicht mehr durch den Zwischenkreiskondensator bestimmt ist, sondern durch einen der Gleichrichterausgänge. Der Sprung des Potenzials zwischen der Speicherdrossel und der Diode im Anschluss an die Abmagnetisierung der Speicherdrossel kann also als Abmagnetisierungssignal betrachtet werden. Die Erfinder haben festgestellt, dass sich das Abmagnetisierungssignal der Speicherdrossel als Indikator für die Einschaltzeitpunkte des Schaltelementes eignen kann. Wird das Schaltelement durch das Abmagnetisierungssignal wieder eingeschaltet, so fließt wieder ein Strom durch das Schaltelement und die Speicherdrossel. Dabei wird die Speicherdrossel erneut aufmagnetisiert. Weiter unten beschriebene bevorzugte Ausgestaltungen der Erfindung betreffen die Detektion des Abmagnetisierungssignales.

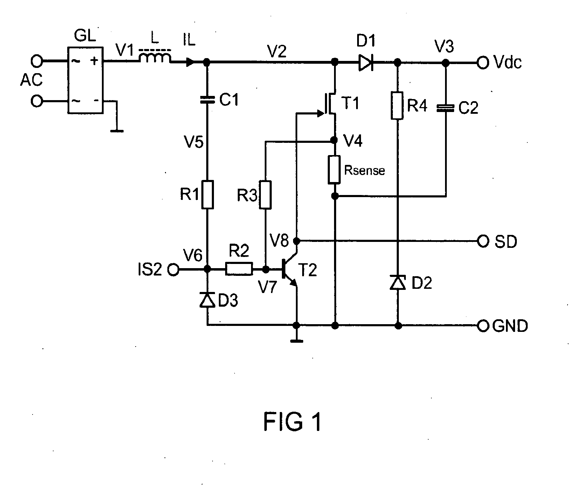

Bei dieser bevorzugten Ausführungsform der Erfindung kann sich ein Ein- und Ausschaltzyklus ohne eine Zwangssteuerung bzw. ohne Vorgabe von Zeiten durch ein Zeitglied wiederholen. Man kann von einer "selbsterregten" Oszillation sprechen. Gleichwohl kann diese Ausführungsform die Halteschaltung mit dem Zeitglied nutzen. Treten nämlich etwa Netzüberspannungen auf, so kann es vorkommen, dass die Ein- und Ausgangsspannung des Hochsetzstellers sich kaum unterscheiden bzw. sogar identisch sind. In diesem Fall treten zwischen der Hochsetzstellerdiode und der Speicherdrossel auch keine großen Potenzialsprünge in Abhängigkeit vom Magnetisierungszustand der Speicherdrossel auf. Im Fall von Netzüberspannungen kann das Abmagnetisierungssignal also nicht mehr verlässlich detektiert werden. Ohne Halteschaltung kann dies - bei einer entsprechenden Ausführung der Hochsetzstellerschaltung - dazu führen, dass das Schaltelement des Hochsetzstellers mit hoher Frequenz ein- und ausgeschaltet wird, obwohl noch Strom durch die Speicherdrossel fließt (etwa bei der Schaltungsanordnung aus Figur 1). Schlimmstenfalls kann dies zur Zerstörung des Schaltelementes des Hochsetzstellers führen.

Die Halteschaltung ist also, wie oben bereits erwähnt, dazu ausgelegt, auch im Fall von Betriebsstörungen, wie Netzüberspannungen, das Schaltelement so lange ausgeschaltet zu halten, bis eine durch das Zeitglied vorbestimmte Zeit abgelaufen ist. Stehen allerdings wieder verlässlich detektierbare Abmagnetisierungssignale zur Verfügung, so wird das Schaltelement vor der durch das Zeitglied bestimmten Zeit durch das Abmagnetisierungssignal wieder eingeschaltet.

Die Halteschaltung garantiert also auch bei Betriebsstörungen, etwa Netzüberspannungen, eine Mindestschaltfrequenz. Es wird in regelmäßigen Abständen versucht, den Hochsetzsteller zu starten. Ist die Netzüberspannung ausreichend abgebaut, so wird die Oszillation des Hochsetzstellers infolge des durch das Zeitglied vermittelten Einschaltens über die Halteschaltung wieder aufgenommen. Es ist also nicht notwendig, die Ein- und Ausgangsspannung des Hochsetzstellers zu erfassen, um im Anschluss an die Netzüberspannungen den Betrieb mit höherer Schaltfrequenz wieder aufzunehmen. Die durch das Zeitglied vorbestimmte Zeit wird folglich größer gewählt als die Abmagnetisierungszeit der Speicherdrossel und damit unter normalen Umständen das Schaltelement immer durch das Abmagnetisierungssignal eingeschaltet. Tritt allerdings kein Abmagnetisierungssignal auf, so wird das Schaltelement durch die Halteschaltung während der durch das Zeitglied vorbestimmten Zeit ausgeschaltet gehalten. Somit verhindert die Halteschaltung ein unkontrolliertes Einschalten des Schaltelementes bei auftretenden Netzüberspannungen.

Bei einer bevorzugten Ausführungsform weist die Halteschaltung ein Schwellwertelement zum Schalten des Schaltelementes und zum Setzen des Zeitgliedes auf. Einem Steuereingang des Schwellwertelementes wird ein dem Strom durch das Schaltelement entsprechendes Signal zugeführt. Im einfachsten Fall ist dies eine zu dem Strom durch das Schaltelement proportionale Spannung. Der Steuereingang des Schwellwertelementes kann je nach Ausführung des Schwellwertelementes etwa einer der Eingänge eines Verstärkers, Komparators oder Schmitt-Triggers sein. Erreicht der Strom durch das Schaltelement einen durch den Schwellwert des Schwellwertelementes bestimmten maximalen Strom, so wird das Schaltelement über das Schwellwertelement ausgeschaltet und das Zeitglied über das Schwellwertelement gesetzt.

Vorzugsweise weist die Halteschaltung einen Halteschalter und einen ersten Spannungsteiler auf. Der Mittenabgriff des ersten Spannungsteilers ist mit dem Steuereingang des Schwellwertelementes verbunden. Die Schaltstrecke des Halteschalters ist in Serie zu dem ersten Spannungsteiler geschaltet. Erreicht der Strom durch das Schaltelement seinen maximalen Wert, so wird der Halteschalter über das Schwellwertelement eingeschaltet, so dass ein Strom durch den ersten Spannungsteiler fließt. Damit fällt über dessen Impedanzen jeweils eine Spannung ab. Diese Impedanzen sind so eingestellt, dass das Potenzial an dem Steuereingang des Schwellwertelementes über den Mittenabgriff des ersten Spannungsteilers das Schaltelement ausgeschaltet hält.

Ist der Halteschalter nicht eingeschaltet, so fließt durch den ersten Spannungsteiler kein Strom und das Potenzial am Steuereingang des Schwellwertelementes wäre undefiniert, wenn es nicht zusätzlich auch anderweitig verschaltet wäre, was im Folgenden noch deutlich wird.

Vorzugsweise ist der Steuereingang des Schwellwertelementes mit einem zweiten Spannungsteiler mit zwei Impedanzen über dessen Mittenabgriff verschaltet. Tritt ein Abmagnetisierungssignal auf, so wird das Potenzial an dem Steuereingang des Schwellwertelementes über den zweiten Spannungsteiler so eingestellt, dass das Schaltelement durch das Schwellwertelement eingeschaltet wird.

Die Halteschaltung kann also den ersten und den zweiten Spannungsteiler umfassen und über den ersten Spannungsteiler das Potenzial an dem Steuereingang des Schwellwertelementes so einstellen, dass das Schaltelement ausgeschaltet bleibt. Fließt durch den ersten Spannungsteiler kein Strom, so wird das Potenzial an dem Steuereingang des Schwellwertelementes über den Mittenabgriff des zweiten Spannungsteilers bestimmt (soweit keine weiteren Signale dem Steuereingang des Schwellwertelementes zugeführt werden, s. unten). In einer solchen Schaltung muss das Potenzial an dem Steuereingang des Schwellwertelementes beim Auftreten eines Abmagnetisierungssignales oder nach Ablauf der durch das Zeitglied vorbestimmten Zeit über den Mittenabgriff des zweiten Spannungsteilers so vorgegeben werden, dass das Schaltelement eingeschaltet wird.

Vorzugsweise weist die Halteschaltung eine Trenndiode auf, welche zwischen die beiden Impedanzen des ersten Spannungsteilers und auch zwischen den Steuereingang des Schwellwertelementes und die dem Halteschalter zugewandt geschaltete Impedanz des ersten Spannungsteilers geschaltet ist. Durch das Abmagnetisierungssignal an einem Verbindungsknoten zwischen der Trenndiode und der dem Halteschalter zugewandt geschalteten Impedanz des ersten Spannungsteilers wird eine Potenzialverschiebung verursacht. Aufgrund der Potenzialverschiebung sperrt die Diode; durch den ersten Spannungsteiler fließt dann kein Strom mehr. Das Potenzial an dem Steuereingang des Schwellwertelementes wird über den zweiten Spannungsteiler dann so eingestellt, dass das Schaltelement durch das Schwellwertelement eingeschaltet wird.

Aufgrund dieser Trenndiode können die beiden Spannungsteiler also entkoppelt werden. Oben geschieht dies durch das Abmagnetisierungssignal. Der erste Spannungsteiler kann das Potenzial am Steuereingang des Schwellenwertelementes nicht mehr beeinflussen, so dass dieses über den Mittenabgriff des zweiten Spannungsteilers eingestellt wird.

Die eben beschriebene bevorzugte Ausführungsform der Erfindung schaltet das Schaltelement durch das Abmagnetisierungssignal ein. Um das Schaltelement auch bei ausbleibendem Abmagnetisierungssignal einzuschalten, sobald die durch das Zeitglied vorbestimmte Zeit abgelaufen ist, ist die Halteschaltung vorzugsweise dazu ausgelegt, den Halteschalter auszuschalten, sobald die durch das Zeitglied bestimmte Zeit abgelaufen ist.

Da die Schaltstrecke des Halteschalters in Serie zu dem ersten Spannungsteiler geschaltet ist, bedeutet ein Ausschalten des Halteschalters, dass durch den ersten Spannungsteiler kein Strom mehr fließt und dieser daher das Potenzial am Steuereingang des Schwellwertelements nicht mehr beeinflussen kann. Auch in diesem Fall wird das Potenzial an dem Steuereingang des Schwellwertelementes über den oben beschriebenen zweiten Spannungsteiler so eingestellt, dass das Schaltelement durch das Schwellwertelement eingeschaltet wird.

Vorzugsweise weist das elektronische Vorschaltgerät einen Transistor auf, dessen Schaltstrecke zwischen den Verbindungsknoten zwischen der dem Halteschalter zugewandten Impedanz des ersten Spannungsteilers und der Trenndiode und das Bezugspotenzial geschaltet ist. Dieser Transistor wird durch das Abmagnetisierungssignal über seinen Steuereingang eingeschaltet. Das Potenzial an dem eben erwähnten Verbindungsknoten erfährt so eine Potenzialverschiebung in Richtung auf das Bezugspotenzial hin, so dass die Trenndiode sperrt.

Eine weitere bevorzugte Ausführungsform verfügt auch über die Halteschaltung mit der Trenndiode. Bei dieser Ausführungsform verbindet eine erste Signalleitung den Steuereingang des Schwellwertelementes mit einer Steuervorrichtung des elektronischen Vorschaltgerätes über die Trenndiode, so dass die Steuervorrichtung das Schaltelement über die erste Signalleitung einschalten kann.

So ist es der Steuervorrichtung des elektronischen Vorschaltgerätes jederzeit möglich, das Schaltelement einzuschalten, und zwar unabhängig von dem Magnetisierungszustand der Speicherdrossel und davon, ob der Halteschalter eingeschaltet ist oder nicht. Auf diese Weise kann der Hochsetzsteller auch im sog. "Continuous-Mode" betrieben werden; der "Continuous-Mode" zeichnet sich dadurch aus, dass mit dem Einschalten des Schaltelementes nicht bis zur vollständigen Abmagnetisierung der Speicherdrossel gewartet wird.

Vorzugsweise weist das Zeitglied eine Serienschaltung aus einem Widerstand und einem Kondensator auf. Das Zeitglied kann zwischen den Steuereingang des Halteschalters und den Ausgang des Schwellwertelements geschaltet sein. Parallel zu dem Widerstand ist eine Diode geschaltet, um ein zügiges Entladen des Kondensators nach dem Zurücksetzen des Zeitgliedes zu ermöglichen. Idealerweise setzt die Halteschaltung das Zeitglied ferner mit dem Einschalten des Schaltelements zurück. In Kombination mit einem zügigen Entladen des Kondensators kann so gegebenenfalls gewährleistet werden, dass der Kondensator beim nächsten Setzen des Zeitgliedes vollständig entladen ist. Aufgrund der Diode trägt der Widerstand beim Entladen des Kondensators nicht zu der Zeitkonstante des Zeitgliedes bei. Sind weitere Widerstände in Serie zu dem Zeitglied geschaltet, so kann auch parallel zu diesen (jeweils) eine Diode geschaltet werden.

Vorzugsweise ist parallel zu dem Zeitglied ein Kondensator geschaltet. Die Signalübertragung kann dadurch deutlich beschleunigt werden, weil eine Spannungsänderung von dem parallel zu dem Zeitglied geschalteten Kondensator differenziell übertragen wird. Ist beispielsweise die Serienschaltung des Kondensators und des Widerstandes des Zeitgliedes etwa zwischen den Ausgang des Schwellenwertelementes und den Steuereingang des Halteschalters geschaltet, so kann eine Potenzialänderung am Ausgang des Schwellwertelementes den Halteschalter besonders schnell schalten.

Vorzugsweise weist das elektronische Vorschaltgerät eine zweite Signalleitung auf, welche den Steuereingang des Schwellwertelementes mit einer Steuervorrichtung des elektronischen Vorschaltgerätes verbindet, wobei die Steuervorrichtung dazu ausgelegt ist, diesen Steuereingang des Schwellwertelementes eine modulierende Spannung zuzuführen. Dies wirkt sich aus wie eine Modulation des Schwellwertes des Schwellwertelementes, so dass auf diese Weise eine Modulation des Abschaltstromes des Hochsetzstellers durchgeführt werden kann. Alternativ ist es bevorzugt, den Schwellwert des Schwellwertelementes direkt zu modulieren.

Vorzugsweise wird dem Steuereingang des elektronischen Vorschaltgerätes über die zweite Signalleitung eine zu dem Momentanwert der Spannung der Versorgung proportionale Spannung zugeführt. Durch die entsprechende Modulation der Abschaltschwelle des Hochsetzstellers werden Netzstromoberschwingungen reduziert.

Vorzugsweise wird der Sprung des Potenziales zwischen der Speicherdrossel und der Diode im Anschluss an die Abmagnetisierung der Speicherdrossel mit mindestens einem Auskoppelkondensator erfasst. Dieser Potenzialsprung kann als Indikator für den Einschaltzeitpunkt des Schaltelementes dienen. In Serie zu diesem Auskoppelkondensator kann ein Widerstand geschaltet sein. Die Zeitkonstante aus diesem Widerstand und dem Auskoppelkondensator ist so groß, dass es während der Abmagnetisierung der Speicherdrossel nicht zu einer vollständigen Aufladung bzw. Entladung des Auskoppelkondensators kommt.

Bei einer alternativen Ausführungsform wird die Abmagnetisierung der Speicherdrossel mit einer Sekundärwicklung detektiert. Der Potenzialsprung entspricht hier einer Änderung der Spannung über der Sekundärwicklung, die die Übersetzung der Spannungsänderung über der Speicherdrossel ist.

Vorzugsweise weist eine Ausführung der Erfindung eine dritte Signalleitung auf, welche den Steuereingang des Schaltelementes mit einer Steuerschaltung des Hochsetzstellers verbindet. Dabei kann die dritte Signalleitung direkt mit dem Steuereingang des Schaltelementes verbunden sein, oder aber mittelbar über eine Schaltung, welche das Schaltelement schaltet, oder einen oder mehrere Widerstände. So kann der Hochsetzsteller mittels dieser Signalleitung von der Steuerschaltung blockiert werden.

Eine bevorzugte Ausführungsform der Erfindung weist einen Widerstand zwischen dem Versorgungspotenzial des Zwischenkreiskondensators und dem Steuereingang des Schaltelementes auf. Wenn am Zwischenkreiskondensator eine ausreichende Spannung anliegt, so kann das Schaltelement über diesen Widerstand eingeschaltet werden. Das heißt, dass die Oszillation selbständig anschwingen kann und keine besonderen Steuersignale nötig sind.

Eine bevorzugte Ausführungsform der Erfindung weist ein Schwellwertelement zur Ansteuerung des Schaltelementes auf. Der Steuereingang dieses Schwellwertelementes ist vorzugsweise über den Auskoppelkondensator und zumindest einen Widerstand an das Potenzial zwischen Speicherdrossel und Diode angeschlossen. Über diesen Pfad kann der Sprung des Potenziales zwischen Speicherdrossel und Diode im Anschluss an die Abmagnetisierung der Speicherdrossel als Eingangssignal für das Schwellwertelement dienen. Weiter ist der Steuereingang des Schwellwertelementes mit dem Potenzial zwischen dem Schaltelement und dem Messwiderstand über zumindest einen Widerstand verbunden. Über diesen Pfad kann das Schwellwertelement in Abhängigkeit vom Strom durch das Schaltelement gesteuert werden.

Mit einer solchen Verschaltung der Bauelemente läuft ein Zyklus des Hochsetzstellers wie folgt ab: In einem ersten Zeitabschnitt ist das Schaltelement eingeschaltet. Über den in Serie zum Schaltelement geschalteten Messwiderstand wird der Strom durch das Schaltelement gemessen. Dieser entspricht in diesem ersten Zeitabschnitt auch dem Strom durch die Speicherdrossel. Das am Messwiderstand abgegriffene Potenzial wird einem Steuereingang des Schwellwertelementes, eventuell über einen oder mehrere Widerstände, als Eingangssignal zugeführt. Übersteigt der Wert des Stromes ein vorgegebenes Maximum, so wird das Schwellwertelement geschaltet. Die erforderliche Verbindung zum Bezugspotenzial kann über die im vorangehenden Absatz vorgestellte Serienschaltung aus einer Diode und einem Widerstand hergestellt werden. Der maximale Strom hängt von der gewählten Dimensionierung der Bauteile der Schaltung ab und ist insofern vorgebbar. Insbesondere können diese Bauteile sein: Der Messwiderstand, ein Widerstand, über den die Spannung über dem Messwiderstand abgegriffen und dem Steuereingang des Schwellwertelementes zuführt wird, und der Widerstand, welcher in Serie zu der Diode die Verbindung zum Bezugspotenzial herstellt. Der Ausgang des Schwellwertelementes ist mit dem Steuereingang des Schaltelementes verbunden und schaltet dieses aus. Das Potenzial zwischen der Speicherdrossel und der Diode springt mit dem Ausschalten des Schaltelementes auf etwa das Versorgungspotenzial des Zwischenkreiskondensators. Dies markiert das Ende des ersten Zeitabschnittes.

In einem folgenden zweiten Zeitabschnitt bleibt das Schaltelement durch die Halteschaltung in seinem Zustand. Dieser Zustand hält bis zum Abmagnetisierungssignal oder bis zu der durch das Zeitglied vorgegebenen Zeit an. Dann schaltet die Halteschaltung das Schaltelement wieder ein und ein neuer Zyklus beginnt.

Der obigen Beschreibung kann man entnehmen, dass wenn Abmagnetisierungssignale vorhanden sind, der Takt des Hochsetzstellers durch die Dauer der Abmagnetisierung der Speicherdrossel bestimmt ist. Das Zeitglied gibt den Takt des Hochsetzstellers vor, wenn von vornherein überhaupt nicht mit Abmagnetisierungssignalen gearbeitet wird, oder wenn diese aufgrund einer Betriebsstörung, etwa Netzüberspannungen, nicht auftreten bzw. zu schwach sind.

Da beim erstmaligen Anlegen einer Versorgungsspannung der gegebenenfalls vorhandene Auskoppelkondensator und der Zwischenkreiskondensator direkt von der Versorgungsspannung aufgeladen werden, kann das Ansteuerpotenzial des Schwellwertelementes in einer Zeit, die deutlich länger ist als die Periodendauer der Ein-/ Ausschaltzyklen des Hochsetzstellers im Betrieb, nicht die Schaltschwelle passieren. Das Schwellwertelement kann ohne weiteres nicht geschaltet werden, bis der Zwischenkreiskondensator auf den betragsmäßig höchsten Momentanwert der Versorgungsspannung geladen ist. Während dieser Zeit ist der Hochsetzsteller blockiert.

Vorzugsweise verfügt daher eine Ausführungsform der Erfindung mit einem Schwellwertelement über eine vierte Signalleitung, welche mit dem Steuereingang des Schwellwertelementes und mit der Steuerschaltung verbunden ist. Dabei kann diese vierte Signalleitung über den Widerstand aus der Serienschaltung aus der Diode und dem Widerstand, welche den Steuereingang des Schwellwertelementes mit dem Bezugspotenzial verbindet, mit dem Steuereingang des Schwellwertelementes verbunden sein. Über die vierte Signalleitung kann das Schwellwertelement von der Steuerschaltung geschaltet werden. Damit ist der Hochsetzsteller während des erstmaligen Aufladens des Zwischenkreiskondensators nicht mehr blockiert.

Die Verwendung von Transistoren als einfache Ausführungsform eines Schwellwertelementes kann den Nachteil haben, dass der maximale Strom durch die Speicherdrossel von der eventuell nicht zu vernachlässigenden Toleranz der Schaltschwelle des Transistors abhängt. Der Transistor kann dabei auch eine Treiberfunktion für das Schaltelement haben.

Bei einer weiteren bevorzugten Ausführungsform der Erfindung wird daher ein Komparator als Schwellwertelement eingesetzt und diesem vorzugsweise eine Treiberschaltung nachgeschaltet. So kann die Abhängigkeit der Einschaltstromschwelle des Schwellwertelementes von Bauteiltoleranzen und Temperaturabhängigkeiten verringert werden. Eine Treiberschaltung besteht üblicherweise aus mehreren Bauteilen und kann unter anderem auch einen oder mehrere Transistoren aufweisen.

Wie weiter oben bereits beschrieben kann der Steuereingang des Schwellwertelementes über einen Widerstand und eine Diode mit dem Bezugspotenzial verbunden sein, wobei der Widerstand an den Steuereingang des Schwellwertelementes angeschlossen ist. An dem Knoten zwischen diesem Widerstand und der Diode kann die Serienschaltung aus Auskoppelkondensator und Widerstand anknüpfen. Vorzugsweise wird bei einer Ausführungsform der Erfindung zu dem Widerstand am Steuereingang ein Kondensator parallel geschaltet. Der Kondensator wirkt als differenzierendes Element, so dass der Sprung des Potenziales im Anschluss an die Abmagnetisierung der Speicherdrossel differentiell auf den Eingang des Komparators übertragen wird, was die Ansteuerung beschleunigen kann.

An einem Eingang des Komparators liegt ein Referenzsignal, an dem anderen Eingang liegen die interessierenden Signale an, welche von dem Messwiderstand und dem Auskoppelkondensator erzeugt werden. Vorzugsweise ist diesem Signaleingang eine Gleichspannung überlagert, die das Potenzial dieses Eingangs weiter vom Bezugspotenzial abhebt. Dazu kann der Eingangsknoten des Komparators beispielsweise über einen Widerstand an das Versorgungspotenzial des Komparators angeschlossen werden.

Bei einer bevorzugten Ausführungsform der Erfindung ist das Referenzsignal proportional zum Momentanwert der Versorgungsspannung. Damit kann die Stromaufnahme des Hochsetzstellers annähernd sinusförmig gestaltet werden.

Es ist oft wünschenswert, Hochsetzsteller wahlweise direkt an der Netzversorgung oder an einem Phasenanschnittdimmer zu betreiben. Dabei muss der Hochsetzsteller eventuell seinen Betrieb an eine Versorgung mit oder ohne Phasenanschnittdimmer anpassen. Dies kann beispielsweise der Fall sein, wenn der Betrieb des Hochsetzstellers in einem der beiden Fälle nicht normenkonform bzgl. Netzstromoberschwingungen verläuft oder der Hochsetzsteller in einem der beiden Fälle ohne eine Umstellung seines Betriebes nicht effektiv arbeitet. Dem elektronischen Vorschaltgerät muss es dann möglich sein, zu erkennen, ob es direkt an der Netzversorgung oder an einem Phasenanschnittdimmer betrieben wird; es können sich dann entsprechende Betriebsparameter einstellen, beispielsweise die Abschaltstromschwelle.

Der Betrieb an einem Phasenanschnittdimmer verändert die an dem elektronischen Vorschaltgerät anliegende Versorgungsspannung in charakteristischer Weise. Dies wird von der Erfindung ausgenutzt. Phasenanschnittdimmer liefern die Netzversorgung erst nach einer einstellbaren Zeit innerhalb einer jeden Netzhalbwelle an das Vorschaltgerät. Während des Phasenanschnittes liegt keine Eingangsspannung an dem Vorschaltgerät an. Nach diesem Zeitpunkt liegt in etwa die ursprüngliche Versorgungsspannung an. Die Spannung am Eingang des elektronischen Vorschaltgerätes weist im Anschluss an den Phasenanschnitt eine steile Flanke auf; es treten Sprünge in der Versorgungsspannung auf.

Eine Ausführungsform der Erfindung weist einen zwischen eine Netzleitung und das Bezugspotenzial des Vorschaltgerätes angeschlossenen Differenzierer auf. Dieser Differenzierer koppelt die Spannungssprünge in der Versorgungsspannung aus. An seinem Ausgang treten im Falle eines Spannungssprunges betragsmäßig relativ große Spitzenspannungen auf. Diese Spitzenspannungen können nach einer eventuellen Weiterverarbeitung, beispielsweise in Form einer Spitzenwerterkennung, einer Steuerschaltung des Hochsetzstellers zugeführt werden, welche dann die Betriebsparameter des Hochsetzstellers entsprechend einstellen kann.

Beim wahlweisen Betrieb von Hochsetzstellern an einem Phasenanschnittdimmer oder direkt an der Netzversorgung ergeben sich besondere Probleme. Ist beispielsweise der Hochsetzsteller ausschließlich auf den Betrieb an einem Phasenanschnittdimmer, wie der aus der EP 1 465 330 A2, ausgelegt, so kann hier bei fehlendem Phasenanschnittdimmer folgendes Problem auftreten: Ab dem Zeitpunkt innerhalb einer Netzhalbwelle des Versorgungsnetzes, zu dem der Zwischenkreiskondensator ausreichend aufgeladen ist, wird üblicherweise die Stromzufuhr der Entladungslampe während der verbleibenden Zeit dieser Halbwelle unterbrochen. Da ein Phasenanschnitt beim direkten Betrieb am Versorgungsnetz fehlt, ist es möglich, dass schon relativ früh innerhalb einer Netzhalbwelle der Hochsetzsteller keinen weiteren Strom aufnimmt. Der Leistungsfaktor als Quotient aus Wirkleistung und Scheinleistung ist klein. Weiter muss unter anderem nach der Norm IEC 61000-3-2 eine Stromaufnahme über 90° Phasenlage hinaus sichergestellt sein.

Vorzugsweise detektiert das elektronische Vorschaltgerät mittels des Differenzierers, ob ein Phasenanschnittdimmer vorgeschaltet ist. Arbeitet das Vorschaltgerät direkt an der Netzversorgung, werden die Betriebsparameter des Hochsetzsteller so eingestellt, dass dieser normenkonform arbeiten kann. Dies kann durch eine Absenkung der Abschaltstromschwelle des Hochsetzstellers geschehen. Der Hochsetzsteller nimmt dann einen Strom niedrigerer Amplitude auf. Um den Zwischenkreiskondensator auf seinen Maximalwert aufzuladen, wird nun über einen längeren Zeitraum innerhalb einer Netzhalbwelle Strom von dem Hochsetzsteller aufgenommen. Die Abschaltstromschwelle kann, um der Norm zu entsprechen, so eingestellt werden, dass die Stromaufnahme des Hochsetzstellers sich bis jenseits der 90° Phasenlage erstreckt.

Je länger das Zeitintervall der Stromaufnahme innerhalb einer Netzhalbwelle ist, desto größer ist auch der Leistungsfaktor des Vorschaltgerätes. Vorzugsweise sind die Betriebsparameter - insbesondere die Abschaltstromschwelle - des Hochsetzstellers so eingestellt, dass die Stromaufnahme in Abwesenheit eines Phasenanschnittdimmers mindestens während der halben Dauer einer Netzhalbwelle erfolgt.

Bei einer besonders einfachen und daher bevorzugten Ausführungsform der Erfindung weist der Differenzierer eine Serienschaltung aus einem Kondensator und einem Widerstand auf. Diese Serienschaltung kann an eine der Netzleitungen in Serie zum Bezugspotenzial des elektronischen Vorschaltgerätes geschaltet werden. Von dem Knoten zwischen dem Widerstand und dem Kondensator kann ein weiterer Kondensator zu der anderen Netzleitung geschaltet werden. An dem Widerstand liegt bei geeigneter Dimensionierung von Kapazität und Widerstand eine zur differenzierten Versorgungsspannung proportionale Spannung an. Ein Vorteil dieser einfachen Implementierung ist die geringe Anzahl an benötigten Bauteilen.

Vorzugsweise ist zu dem Widerstand aus der im vorstehenden Absatz beschriebenen Differenziererschaltung eine Spitzenwerterfassungsschaltung parallel geschaltet. Wird der Hochsetzsteller an einem Phasenanschnittdimmer betrieben, so kann mit dem über dem Widerstand erfassten Spitzenwert die Steuerung des Hochsetzstellers angesteuert werden, beispielsweise mittels eines an die Spitzenwerterfassung angeschlossenen Schaltelementes.

Die vorstehende und die nachfolgende Beschreibung der einzelnen Merkmale beziehen sich auf das elektronische Vorschaltgerät und auf eine Entladungslampe mit einem erfindungsgemäßen integrierten elektronischen Vorschaltgerät. Weiter bezieht sie sich mit den einzelnen Merkmalen auch auf ein der Erfindung entsprechendes Verfahren zum Betrieb eines elektronischen Vorschaltgeräts. Dies gilt auch, ohne dass es im Einzelnen noch explizit erwähnt wird.

Die Erfindung bezieht sich also grundsätzlich auch auf ein Verfahren zum Betrieb eines elektronischen Vorschaltgerätes für eine Entladungslampe mit einem Hochsetzsteller, welcher eine Speicherdrossel, eine Diode, einen Zwischenkreiskondensator und ein Schaltelement aufweist, dadurch gekennzeichnet, dass das Schaltelement im Hochsetzsteller beim Erreichen eines maximalen Stromwertes des durch das Schaltelement fließenden Stromes ausgeschaltet wird, und dass das Vorschaltgerät eine Halteschaltung mit einem Zeitglied aufweist, welche Halteschaltung das Zeitglied bei einem Ausschalten des Schaltelementes setzt, und das Schaltelement einschaltet, wenn eine durch das Zeitglied bestimmte Zeit abgelaufen ist.

### Kurze Beschreibung der Zeichnungen

Im Folgenden soll die Erfindung anhand von Ausführungsbeispielen näher erläutert werden. Die dabei offenbarten Einzelmerkmale können auch in anderen Kombinationen erfindungswesentlich sein. Die vorstehende und die folgende Beschreibung beziehen sich auf die Vorrichtungskategorie und die Verfahrenskategorie der Erfindung, ohne dass dies im Einzelnen noch explizit erwähnt wird.
- Figur 1: zeigt eine Hochsetzstellerschaltung, anhand derer Merkmale der Erfindung erläutert werden, welche aber kein Ausführungsbeispiel der Erfindung ist.
- Figuren 2 a, b, c: zeigen relevante Strom- und Spannungsverläufe der Schaltungsanordnung aus Figur 1.
- Figur 3: zeigt eine Modifikation der Schaltungsanordnung aus Figur 1.
- Figuren 4 a, b, c: zeigen relevante Strom- und Spannungsverläufe der Schaltungsanordnung aus Figur 3.
- Figur 5: zeigt eine Hochsetzstellerschaltung als Bestandteil eines erfindungsgemäßen elektronischen Vorschalt- gerätes.
- Figuren 6a, b, c, d, e: zeigen relevante Strom- und Spannungsverläufe der Schaltungsanordnung aus Figur 5.
- Figuren 7a, b, c: zeigen weitere relevante Strom- und Spannungsver- läufe der Schaltungsanordnung aus Figur 5.
- Figur 8: zeigt eine Modifikation der Schaltungsanordnung aus Figur 5.
- Figur 9: zeigt eine Schaltungsanordnung zur Detektion eines Phasenanschnittes in der Versorgungsspannung.

### Bevorzugte Ausführung der Erfindung

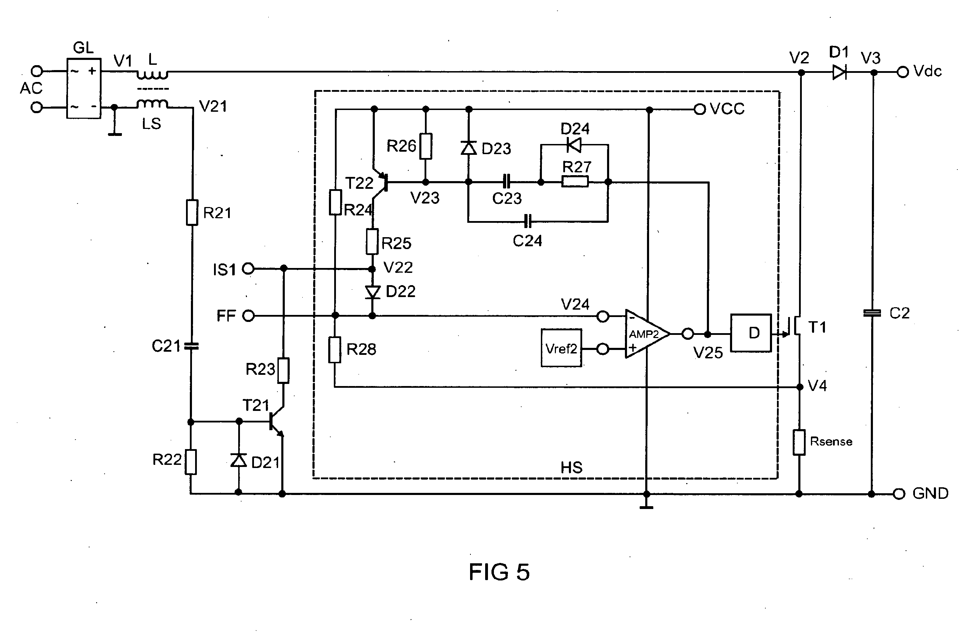

Zum besseren Verständnis der Funktionsweise der Erfindung wird zunächst in den Figuren 1 bis 4 eine Hochsetzstellerschaltung ohne die erfindungsgemäße Halteschaltung gezeigt. Diese wird dann in Figur 5 gezeigt und weiter unten erläutert.

An der Schaltungsanordnung in Figur 1 liegt eine über einen Wechselspannungseingang AC zugeführte und mit einem Gleichrichter GL gleichgerichtete Spannung zwischen einem Knoten V1 und einem Bezugspotenzial GND an.

An den Ausgang des Gleichrichters ist eine erste Serienschaltung aus einer Speicherdrossel L, einer Diode D1 und einem Zwischenkreiskondensator C2 geschaltet.

Die Verbindung zwischen der Speicherdrossel L und der Diode D1 stellt einen Knoten V2 dar. Zwischen dem Knoten V2 und dem Bezugspotenzial GND ist eine Serienschaltung aus einem Schaltelement T1 und einem (Mess- oder Shunt-) Widerstand Rsense geschaltet. Das Schaltelement T1 kann als MOSFET ausgeführt sein. Der Widerstand Rsense ist mit dem Bezugspotenzial GND verbunden. Ein Knoten V8 liegt auf dem Potenzial des Steuereingangs des Schaltelementes T1.

Zwischen den Steuereingang des Schaltelements T1 und das Bezugspotenzial GND ist ein Schwellwertelement T2 geschaltet. Das Schwellwertelement T2 kann als (Bipolar-)Transistor ausgeführt sein. Weiter unten folgt ein Ausführungsbeispiel mit einem Komparator als Schwellwertelement. Ein Knoten V7 liegt auf dem Potenzial des Steuereinganges des Schwellwertelementes T2.

Ein Widerstand R3 verbindet einen Knoten V4 zwischen T1 und Rsense mit dem Knoten V7.

Zwischen dem Knoten V2 und dem Bezugspotenzial GND liegt eine Serienschaltung aus einem Auskoppelkondensator C1, einem Widerstand R1 und einer Diode D3. Ein Knoten V6 liegt auf der Verbindung zwischen dem Widerstand R1 und der Diode D3.

Zwischen dem Knoten V6 und dem Knoten V7 liegt ein Widerstand R2. Ein Knoten V3 liegt auf der Verbindung zwischen der Diode D1 und dem Kondensator C2.

Zwischen den Knoten V3 und das Bezugspotenzial GND ist eine Serienschaltung aus einem Widerstand R4 und einer Diode D2 geschaltet. Der Verbindungsknoten zwischen der Diode D2 und dem Widerstand R4 ist mit dem Steuereingang des ersten Schaltelements T1 verbunden. Die Diode D2 ist als Zener-Diode ausgeführt.

Eine Signalleitung IS2 ist mit dem Knoten V6 verbunden. Diese kann kurzzeitig von einer Steuerschaltung auf das Bezugspotenzial GND gesetzt werden.

Eine zweite Signalleitung SD ist mit dem Steuereingang des Schaltelementes T1 verbunden. Mit dieser Signalleitung kann die Steuerschaltung den Hochsetzsteller blockieren.

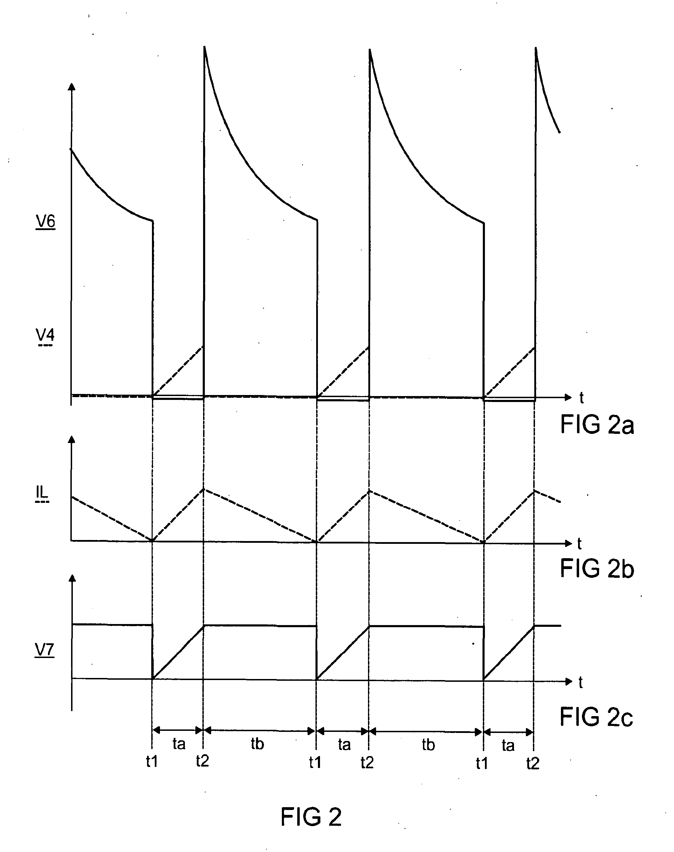

Figur 2 a zeigt das Potenzial am Knoten V6 und am Knoten V4 als Funktionen der Zeit. Durch die Speicherdrossel L fließt ein Strom IL. Mittels des Widerstandes Rsense wird am Knoten V4 eine zu dem Strom IL durch die Speicherdrossel L proportionale Spannung gemessen. An dem Knoten V6 bildet das Potenzial den Magnetisierungszustand der Speicherdrossel L ab. Dies wird durch den Auskoppelkondensator C1 geleistet. Wird die Speicherdrossel aufmagnetisiert, so wird der Auskoppelkondensator C1 entladen. Das Potenzial an dem Knoten V6 entspricht dabei in etwa dem Bezugspotenzial GND, weil es von der Diode D3 auf eine der Durchlassspannung entsprechenden negativen Wert bzgl. des Bezugspotenziales GND geklemmt wird. Wird dann die Speicherdrossel L abmagnetisiert, so wird der Auskoppelkondensator C1 geladen. An dem Knoten V6 bildet sich ein Potenzial aus, das deutlich über dem Bezugspotenzial GND liegt. Der Auskoppelkondensator C1 ist so dimensioniert, dass die Zeitkonstante aus der Kapazität C1 und dem Widerstand R1 so groß ist, dass es während der Abmagnetisierung der Speicherdrossel L, im Zeitintervall tb, nicht zu einer vollständigen Aufladung des Auskoppelkondensators C1 kommt und das Potenzial an dem Knoten V6 oberhalb der Einschaltschwelle des Schwellwertelementes T2 bleibt.

In den Figuren 2 a, b, c sind Intervalle ta und tb und Zeitpunkte t1 und t2 eingezeichnet, welche den relevanten Zeitabschnitten entsprechen.

Figur 2 b zeigt den Strom IL durch die Speicherdrossel L als Funktion der Zeit. Figur 2 c zeigt das Potenzial an dem Knoten V7 als Funktion der Zeit.

In der Phase ta ist das Schaltelement T1 eingeschaltet und das Schwellwertelement T2 ausgeschaltet. Das am Knoten V4 anliegende Potenzial wächst proportional zu dem Strom IL durch die Speicherdrossel. Das Potenzial an dem Knoten V6 entspricht dabei in etwa dem Bezugspotenzial GND. Wenn das Potenzial am Knoten V7, welcher über den Widerstand R3 mit dem Knoten V4 verbunden ist, die Einschaltschwellenspannung des Schwellwertelementes T2 überschreitet, so wird das Schwellwertelement T2 eingeschaltet und das Schaltelement T1 ausgeschaltet. Damit ist auch der maximale Strom durch den Hochsetzsteller begrenzt. Der entsprechende Zeitpunkt t2 definiert das Ende des Zeitintervalls ta.

Im Anschluss an den Zeitpunkt t2 folgt das Zeitintervall tb. Das Schwellwertelement T2 wird zu dem Zeitpunkt t2 mittelbar durch das Potenzial an dem Knoten V4 über den Widerstand R3 eingeschaltet. Dabei wird das Schaltelement T1 von dem Schwellwertelement T2 ausgeschaltet. An dem Knoten V6 springt das Potenzial zum Zeitpunkt t2 auf einen Wert, der deutlich über dem Bezugspotenzial GND liegt. Die Speicherdrossel wird während des Zeitintervalls tb abmagnetisiert. Es fließt ein Strom durch C1, R1 und R2 zum Steuereingang des Schwellwertelementes T2 und hält diesen eingeschaltet solange der Abmagnetisierungsstrom fließt. Das Schaltelement T1 ist ausgeschaltet, da an seinem Steuereingang das Potenzial nicht mehr die Einschaltschwelle überschreitet.

Das Zeitintervall tb endet mit der vollständigen Abmagnetisierung der Speicherdrossel L. Damit springt das Potenzial am Knoten V2 auf das Potenzial am Knoten V1 am Ende des Zeitintervalls tb. Dieser Sprung definiert den Zeitpunkt t1 und bedingt über den Auskoppelkondensator C1, den Widerstand R1 und die Diode D3 an dem Knoten V6 ein Potenzial, das in etwa dem Bezugspotenzial GND entspricht. Am Steuereingang des Schwellwertelementes T2 reicht das Potenzial nicht mehr aus, um das Schwellwertelement T2 eingeschaltet zu halten. Es sperrt.

Die Spannung über dem Zwischenkreiskondensator C2 schaltet nun das Schaltelement T1 über den Widerstand R4 ein. Es beginnt wieder eine neue Phase ta. Die hochfrequente Oszillation des Hochsetzstellers läuft selbstständig weiter.

Zum Start der Oszillation kann man zwei Fälle unterscheiden. Im ersten Fall ist das Schwellwertelement T2 ausgeschaltet und am Zwischenkreiskondensator C2 liegt eine ausreichende Spannung an. Dann wird das Schaltelement T1 von der Spannung über dem Zwischenkreiskondensator über R4 eingeschaltet. Im zweiten Fall kann die Steuerschaltung über die Signalleitung IS2 die Spannung am Knoten V6 kurzzeitig auf das Bezugspotenzial GND setzen. Dadurch wird das Schaltelement T1 über den Widerstand R4 eingeschaltet.

Der zweite Fall kann auftreten, wenn beim erstmaligen Anlegen der Versorgungsspannung AC die Kondensatoren C1 und C2 parallel auf das Potenzial V1 aufgeladen werden. Das Potenzial V6 kann dann während einer Zeit, die deutlich länger ist als die Periodendauer des Hochsetzstellers, nicht unter die Einschaltschwellenspannung des Schwellwertelementes T2 sinken. Das Schwellwertelement T2 kann nicht ausgeschaltet werden, bis die Aufladung des Zwischenkreiskondensators C2 auf den höchsten Momentanwert der Versorgungsspannung abgeschlossen ist. In diesem Zustand ist der Hochsetzsteller durch das Schwellwertelement T2 blockiert.

Die Steuerschaltung kann über die Signalleitung SD den Betrieb des Hochsetzstellers jederzeit blockieren. Dies kann beispielsweise beim Erreichen einer gewünschten Spannung an dem Zwischenkreiskondensator C2 geschehen.

Das Schwellwertelement T2 hat in einer wie oben beschriebenen Schaltungsanordnung mehrere Funktionen: Einmal ist es ein Schwellwertelement zur Detektion von Signalen an dem Knoten V7; die zweite Funktion ist, das Schaltelement T1 anzusteuern oder zu treiben. Weiter arbeitet das Schwellwertelement auch als ein Inverter.

Bei der Schaltungsanordnung nach Figur 1 ist der sich ergebende maximale Strom durch die Speicherdrossel L von der Toleranz der Schaltschwelle des Schwellwertelementes T2 abhängig.

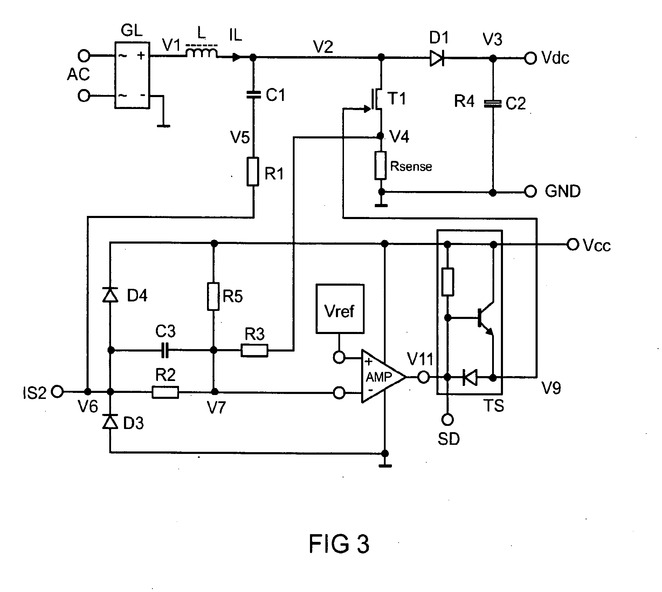

Figur 3 zeigt ein Schaltdiagramm zu einer zweiten erfindungsgemäßen Schaltungsanordnung, die diesbezüglich verbessert ist.

Als Schwellwertelement wird kein Transistor, sondern ein Komparator AMP mit nachgeschalteter Treiberschaltung TS eingesetzt. Da der Komparator AMP nicht alleine die Leistung zur Ansteuerung des Schaltelementes T1 zur Verfügung stellen kann, ist ihm die Treiberschaltung TS nachgeschaltet. Der Komparator AMP erhält eine separate Spannungsversorgung Vcc. Eine Diode D4 ist zwischen den Knoten V6 und das positive Versorgungspotenzial Vcc geschaltet. Man kann parallel zum Widerstand R2 einen Kondensator C3 schalten. Dies beschleunigt das Ansteigen des Potenzials am Knoten V7 bei einem Ansteigen des Potenzials am Knoten V6 zum Zeitpunkt t1, weil er den Potenzialsprung differentiell überträgt. Die Umladung von C3 erfolgt deutlich schneller als das Ansteigen der Spannung an dem Knoten V7 durch die Zunahme des Stromes IL. Der Effekt ist in Figur 2 c bereits berücksichtigt. Der Kondensator C3 ist in Figur 3 eingezeichnet. Zwischen den Kondensator C3 und den Widerstand R3 ist ein Widerstand R5 zur Versorgungsspannung Vcc geschaltet.

Einem Eingang des Komparators AMP wird eine Abschaltschwelle Vref zugeführt. Diese entspricht dem Ausschaltkriterium für das Schaltelement T1. Sie kann konstant festgesetzt, aber auch variabel gestaltet werden, beispielsweise proportional zum Verlauf der Eingangsspannung AC.

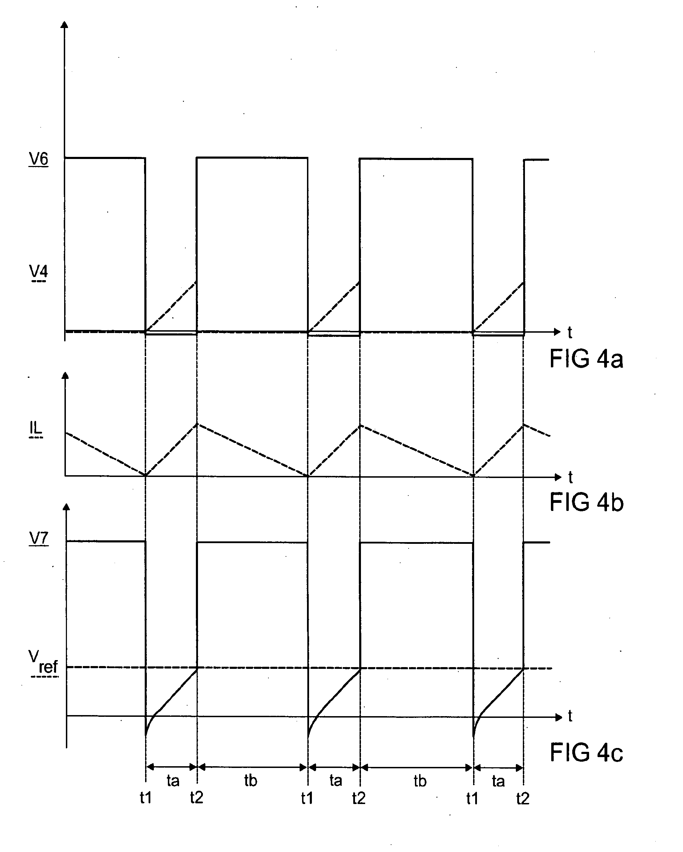

Der Eingang des Komparators sollte nicht mit zu hohen Spannungen belastet werden. Das Abschalten des Schaltelements T1 zum Zeitpunkt t2 verursacht einen Spannungssprung am Knoten V7. Um diesen Sprung zu begrenzen wird eine Diode D4 vom Knoten V6 zum positiven Versorgungspotenzial Vcc des Komparators geschaltet. Dadurch wird die Spannung am Knoten V6 auf ein Potenzial begrenzt, das um die Durchlassspannung der Diode D4 höher ist als das Versorgungspotenzial Vcc des Komparators, vgl. Figur 4.

Um die Störempfindlichkeit des Komparators zu senken ist ein so genannter Pull-up-Widerstand R5 zwischen den Knoten V7 und die positive Versorgungspotenzial Vcc geschaltet. Das Potenzial am Knoten V7 wird dadurch vom Bezugspotenzial abgehoben. Dadurch wird zwar der Signalhub verringert, die Maßnahme kann aber trotzdem vorteilhaft sein, weil das Signal-zu-Rausch-Verhältnis verbessert werden kann.

Treten erhebliche Netzüberspannungen auf, so kann es vorkommen, dass die Eingangsspannung der Hochsetzstellerschaltung ähnliche Werte annimmt wie die Ausgangsspannung. In diesem Fall weist das Potenzial V2 zwischen der Speicherdrossel L und der Diode D1 keine klar erkennbaren Potenzialsprünge in Abhängigkeit vom Magnetisierungszustand der Speicherdrossel L auf (s. Figuren 1 und 3). Daher stellt das Potenzial V2 in diesem Fall keinen deutlichen Potenzialsprung im Anschluss an das Abmagnetisieren der Speicherdrossel zum Einschalten des Schaltelementes T1 zur Verfügung; weiter kann es auch nicht mehr als Haltesignal verwendet werden, durch welches das Schaltelement T1 während des Abmagnetisierens der Speicherdrossel L ausgeschaltet bleibt. Bei der Schaltungsanordnung in Figur 1 könnte dies etwa dazu führen, dass das Schaltelement T1 über den Widerstand R4 unkontrolliert eingeschaltet wird, auch wenn noch ein Strom durch die Speicherdrossel L fließt. Ein unerwünschtes hochfrequentes Schalten des Schaltelementes T1 ist so möglich.

Figur 5 zeigt nun eine erfindungsgemäße Schaltungsanordnung. Die in Figur 5 gezeigte Hochsetzstellerschaltung, die Bestandteil eines erfindungsgemäßen elektronischen Vorschaltgerätes ist, garantiert im Fall von Netzüberspannungen eine minimale Einschaltfrequenz des Schaltelementes T1 und verhindert gleichzeitig ein unkontrolliertes Einschalten desselben.

Die Schaltung in Figur 5 wird genau wie die in Figur 1 oder 3 über eine gleichgerichtete Wechselspannung versorgt. Die Serienschaltung der Speicherdrossel L, der Diode D1 und des Zwischenkreiskondensators C2 aus Figur 1 liegt auch hier vor und ist genauso verschaltet. Weiter ist, genau wie in Figur 1, eine Serienschaltung aus einem Schaltelement T1 und einem Messwiderstand Rsense parallel zu der Diode D1 und dem Zwischenkreiskondensator C2 geschaltet. Für diese Bauteile werden in den Figuren 1 und 5 die gleichen Bezugszeichen verwendet.

In Figur 5 erkennt man eine Halteschaltung HS. Diese weist einen eigenen Versorgungspotenzialanschluss VCC auf. Zwischen das Versorgungspotenzial VCC und einen zwischen dem Schaltelement T1 und dem Messwiderstand Rsense liegenden Knoten V4 ist eine Serienschaltung aus einem Widerstand R24 und einem Widerstand R28 geschaltet. Deren Mittenabgriff ist mit dem invertierenden Eingang eines Komparators AMP2 verbunden. Am nicht invertierenden Eingang des Komparators AMP2 liegt eine Referenzspannung Vref2 an. Der Ausgang des Komparators AMP2 ist über einen Treiber D mit dem Steuereingang des Schaltelementes T1 verbunden. Zur Versorgung ist der Komparator AMP2 zwischen das Versorgungspotenzial VCC und das Bezugspotenzial GND geschaltet. Parallel zu dem Widerstand R24 ist eine Serienschaltung aus einem Bipolartransistor T22, einem Widerstand R25 und einer Diode D22 geschaltet. Zwischen den Steuereingang des bipolaren Transistors T22 und den Ausgang des Komparators AMP2 ist eine Serienschaltung aus einem Kondensator C23 und einem Widerstand R27 geschaltet. Parallel zu dem Widerstand R27 ist eine Diode D24 geschaltet, parallel zu dem Kondensator C23 und dem Widerstand R27 ein Kondensator C24. Zwischen den Steuereingang des Transistors T22 und das Versorgungspotenzial VCC ist ein Widerstand R26 geschaltet, parallel zu dem Widerstand R26 eine Diode D23.

Anders als in Figur 1 oder 3 wird das Potenzial V2 zwischen der Speicherdrossel L und der Diode D1 nicht über einen Kondensator (C1 in Figuren 1 und 3), sondern über eine Sekundärwicklung LS auf der Speicherdrossel L ausgekoppelt (natürlich könnte aber auch hier das Abmagnetisierungssignal kapazitiv ausgekoppelt werden). Zwischen die Sekundärwicklung LS und das Bezugspotenzial GND sind ein Widerstand R21, ein Kondensator C21 und ein Widerstand R22 in dieser Reihenfolge geschaltet. Zwischen einen Knoten V22 zwischen dem Widerstand R25 und der Diode D22 und das Bezugspotenzial GND sind ein Widerstand R23 und die Schaltstrecke eines Transistors T21 geschaltet. Der Steuereingang des Transistors T21 ist mit einem Knoten zwischen dem Kondensator C21 und dem Widerstand R22 verbunden. Parallel zu dem Widerstand R22 ist eine Diode D21 geschaltet.

An den Knoten V22 ist eine Signalschaltung IS1 angeschlossen und an den invertierenden Eingang des Komparators AMP2 eine Signalleitung FF.

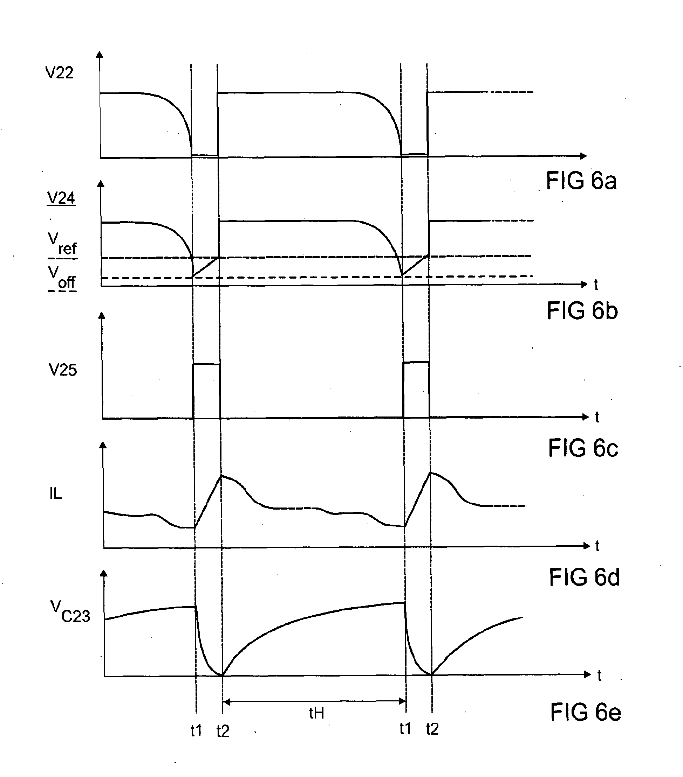

Figur 6 zeigt den Verlauf des Stromes IL durch den Hochsetzsteller und einige relevante Potenzialverläufe für den Fall, dass die Wechselspannungsversorgung Netzüberspannungen aufweist und ein Potenzialsprung des Potenziales V2 zwischen der Speicherdrossel L und der Diode D1 im Anschluss an die Abmagnetisierung der Speicherdrossel L nicht ausgekoppelt werden kann.

Genau wie in den Schaltungsanordnungen der Figuren 1 und 3 nimmt der Strom bei eingeschaltetem Schaltelement T1 durch dasselbe im Laufe der Zeit zu. Entsprechend steigt das Potenzial an einem Knoten V4 zwischen dem Schaltelement T1 und dem Messwiderstand Rsense. Da der invertierende Eingang des Komparators AMP2 über den Widerstand R28 mit dem Knoten V4 verbunden ist, steigt auch an diesem das Potenzial. Solange es unterhalb der als Schwelle wirkenden Referenzspannung Vref2 bleibt, ist der Ausgang des Komparators AMP2 gegenüber dem Bezugspotential GND hochohmig (logisch eins). Erreicht das Potenzial am invertierenden Eingang des Komparators AMP2 die Schwelle Vref2, so wird der Ausgang des Komparators AMP2 niederohmig (logisch Null) und das Schaltelement T1 über den Treiber D ausgeschaltet. Durch die Serienschaltung des Widerstandes R26, des Kondensators C23 und des Widerstandes R27 fließt dann ein Strom. Durch die dann an dem Widerstand R26 abfallende Spannung wird der Bipolartransistor T22 eingeschaltet. Der Kondensator C23 ist zunächst entladen und wird mit andauerndem Stromfluss zunehmend aufgeladen. Die Ladezeit des Kondensators C23 bestimmt, wie lange ein Strom durch diesen fließen und eine den Transistor T22 eingeschaltet haltende Spannung über dem Widerstand R26 abfallen kann.

Solange der Transistor T22 eingeschaltet ist, fließt durch die Serienschaltung der Schaltstrecke des Transistors T22, des Widerstandes R25, der Diode D22, des Widerstandes R28 und des Messwiderstandes Rsense ein Strom. Dieser Strom stellt das Potenzial an einem Knoten V24 zwischen der Diode D22 und dem Widerstand R28, also an dem invertierenden Eingang des Schwellwertelements AMP2, auf einen Wert größer als Vref2 ein, s. Figuren 6a und b. Dadurch bleibt der Ausgang des Komparators AMP2 logisch Null, obwohl durch das Schaltelement T1 kein Strom mehr fließt. Dieses Haltesignal ist unabhängig von dem Verlauf des Potenziales V2 zwischen der Speicherdrossel L und der Diode D1.

Die Ladezeit des Kondensators C23 bestimmt eine Haltezeit tH. Ist der Kondensator hinreichend geladen, so kann kein ausreichender Strom mehr fließen und über dem Widerstand R26 fällt keine ausreichende Spannung mehr ab; der Transistor T22 wird ausgeschaltet, s. Figur 6e. Damit wird das Potenzial V24 an dem invertierenden Eingang des Komparators AMP2 nicht mehr durch die den ersten Spannungsteiler darstellenden Widerstände R25 und R28 beeinflusst, sondern durch den Strom durch die einen zweiten Spannungsteiler darstellenden Widerstände R24 und R28. Dieser Spannungsteiler ist so ausgelegt, dass das Potenzial am invertierenden Eingang des Komparators AMP2 auf einen Wert unterhalb des Referenzpotenziales Vref2 fällt und der Komparator AMP2 nun über das Treiberelement D das Schaltelement T1 wieder einschaltet.

In den Figuren 6a und b sieht man den Potenzialen an den Knoten V22 und V24 an, dass das Schaltelement T22 nicht unendlich schnell ausschaltet, daher sind die Flanken nicht unendlich steil.

Aufgrund der Netzüberspannung kann der Strom IL durch den Hochsetzsteller T1 einen ungleichmäßigen Verlauf annehmen, was durch eine entsprechende Kurvenform in Figur 6d angedeutet ist.

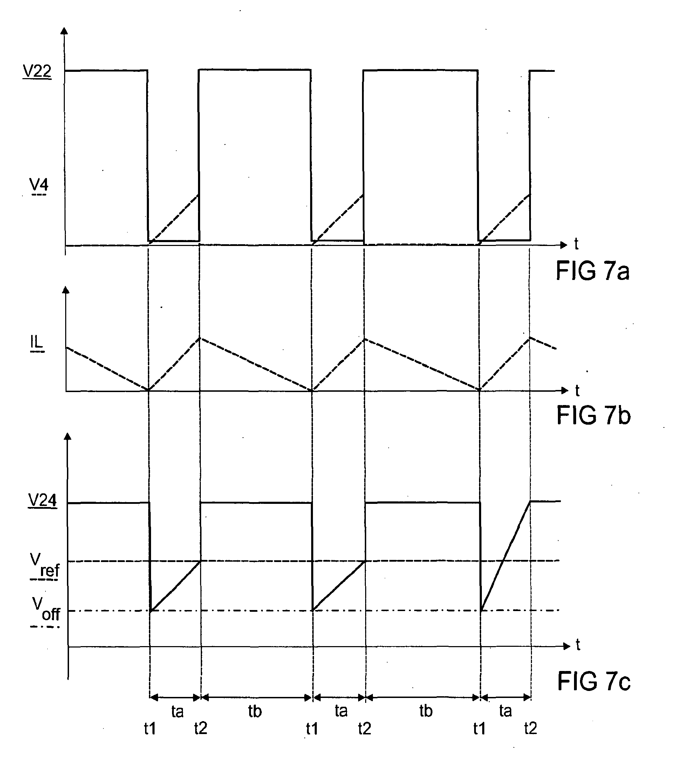

Figur 7 zeigt den Strom durch den Hochsetzsteller und einige relevante Potenzialverläufe für den Normalbetrieb der in Figur 5 gezeigten Schaltungsanordnung, d.h. ohne Netzüberspannungen.

In diesem Fall können über die Sekundärwicklung LS eindeutig eine Abmagnetisierung der Speicherspule L anzeigende Potenzialsprünge des Potenzials V2 zwischen der Speicherspule L und der Diode D1 ausgekoppelt werden. Detektiert die Sekundärwicklung LS einen entsprechend starken Potenzialabfall, so wird dadurch der Transistor T21 eingeschaltet. Das Potenzial an dem Knoten V22 fällt auf einen Wert unterhalb des Referenzpotenzial Vref2. Daraufhin schaltet der Komparator AMP2 über den Treiber D das Schaltelement T1 ein.

Figur 7b zeigt, wie der Strom in der Speicherdrossel L bei eingeschaltetem Schaltelement T1 während des Zeitintervalls ta zunimmt. Überschreitet der Strom durch das Schaltelement T1 seinen durch den Schwellwert Vref2 bestimmten Wert, so wird über den Komparator AMP2 und den Treiber D das Schaltelement T1 wieder ausgeschaltet. Auch im Normalbetrieb fließt dann ein Strom durch den Kondensator C23 und den Widerstand R27, und wird der Transistor T22 über den Widerstand R26 eingeschaltet. Dann zieht der Spannungsteiler aus den Widerständen R25 und R28 das Potenzial V24 an dem invertierenden Eingang des Komparators AMP2 auf einen Wert oberhalb der Referenzspannung Vref2 und hält so das Schaltelement T1 über den Komparator AMP2 und den Treiber D ausgeschaltet.

Nach einer Zeit tb detektiert die Sekundärwicklung LS wieder ein Abmagnetisieren der Speicherspule L und schaltet den Transistor T21 erneut ein. Das Potenzial an dem Knoten V22 fällt auf einen Wert unterhalb des Referenzpotenziales Vref2, die Diode D22 sperrt, das Potenzial an dem invertierenden Eingang des Komparators AMP2 wird über den zweiten Spannungsteiler R24, R28 bestimmt und das Schaltelement T1 wird wieder eingeschaltet. Im Unterschied zu den Figuren 6a und 6b weist das Potenzial an dem Knoten V22, s. Figur 7a, eine extrem steile Flanke vor dem Einschalten des Schaltelementes T1 auf.

Ohne Netzüberspannungen fällt der Strom IL durch den Hochsetzsteller linear mit zunehmender Abmagnetisierung der Speicherdrossel L.

Die Diode D24 ist parallel zu dem Widerstand R27 und die Diode D23 parallel zu dem Widerstand R26 geschaltet, damit in der Zeit, während der das Schaltelement T1 eingeschaltet ist, der Kondensator C23 möglichst schnell entladen wird. Dadurch kann gewährleistet werden, dass der Kondensator C23 beim nächsten Ausschalten des Schaltelementes T1 komplett entladen ist.

Das Einschalten des Transistors T22 wird durch den Kondensator C24 beschleunigt, da er die Abnahme des Ausgangspotenzials des Komparators AMP2 differentiell auf den Steuereingang des Transistors T22 überträgt. Das Einschalten des Transistors T22 wird damit unabhängig von den absoluten Werten des Potenzials am Ausgang des Komparators AMP2. Dies verhindert ein Prellen des Komparatorausgangs.

Der Knoten V22 ist über eine Signalleitung IS1 mit einer Steuerungsvorrichtung des elektronischen Vorschaltgerätes verschaltet. Über diese Steuervorrichtung kann das Schaltelement T1 jederzeit unabhängig vom Magnetisierungszustand der Speicherdrossel L und des Ladezustandes des Kondensators C23 eingeschaltet werden. Dazu muss das Potenzial an dem Knoten V22 lediglich auf einen Wert unterhalb des Referenzpotenziales Vref2 gezogen werden. Damit ist auch ein Betrieb des Hochsetzstellers im "Continuous-Mode" möglich.

Der Mittenabgriff des zweiten Spannungsteilers R24, R28 ist über die Signalleitung FF ebenfalls mit der Steuerschaltung des elektronischen Vorschaltgerätes verschaltet. Über diese Signalleitung FF wird dem invertierenden Eingang des Komparators AMP2 eine der Wechselspannung AC proportionale Spannung hinzuaddiert. Dies wirkt wie eine entsprechende Modulation des Referenzpotenziales Vref2 und führt zu einer sinusförmigen Modulation der Abschaltstromschwelle der Hochsetzstellerschaltung.

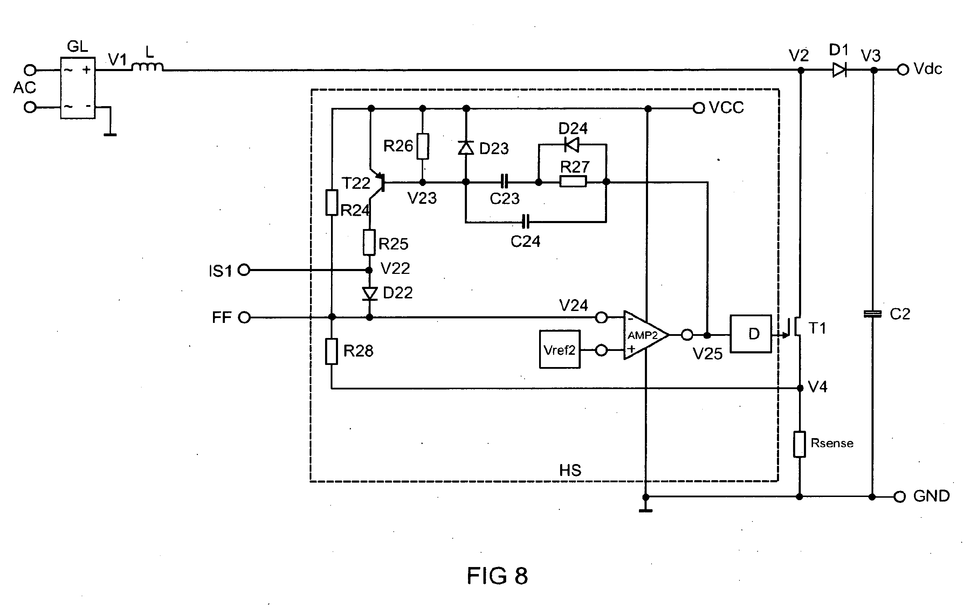

Figur 8 zeigt eine Modifikation der Schaltungsanordnung aus Figur 5. Das Abmagnetisierungssignal wird bei dieser Schaltungsanordnung überhaupt nicht ausgekoppelt und dient entsprechend auch nicht als Indikator für den Einschaltzeitpunkt des Schaltelementes T1. Auch diese Schaltungsanordnung stellt einen funktionsfähigen Hochsetzsteller dar. Die Funktionsweise entspricht der anhand der Figuren 5 und 6 erläuterten Funktionsweise in Abwesenheit von verlässlichen Abmagnetisierungssignalen. Die Einschaltzeitpunkte des Schaltelementes T1 werden wie oben beschrieben durch die Halteschaltung HS mit dem Zeitglied R27, C23 bestimmt.

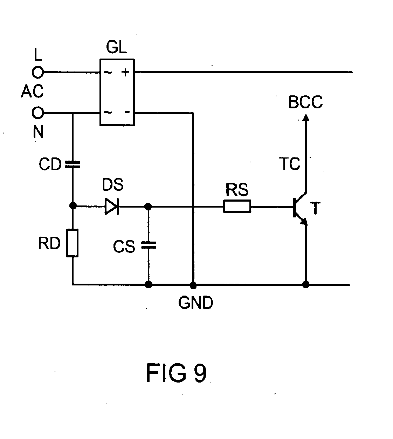

Figur 9 zeigt eine erfindungsgemäße Schaltungsanordnung zur Erkennung, ob das elektronische Vorschaltgerät direkt am Versorgungsnetz oder an einem Phasenanschnittdimmer betrieben wird. Ein Kondensator CD wird als differenzierendes Element an eine der Netzuleitungen N oder L geschaltet. In Serie zu diesem Kondensator CD wird ein Widerstand RD geschaltet, der den Kondensator CD mit dem Bezugspotenzial GND verbindet. An den Knoten zwischen dem Kondensator CD und dem Widerstand RD wird die Anode einer Diode DS geschaltet, deren Kathode wird in Serie mit einem weiteren Kondensator CS ebenfalls an das Bezugspotenzial GND geschaltet. Diese Schaltung stellt eine Spitzenwerterfassungsschaltung der über dem Widerstand RD auftretenden Spannung dar. An dem Knoten zwischen dem Kondensator CS und der Diode DS ist über einen Widerstand RS die Basis eines Transistors T angeschlossen. Der Emitter ist mit dem Bezugspotenzial GND und der Kollektor TC mit Elementen des Hochsetzstellers verbunden, welche den Ablauf des Hochsetzstellerbetriebes beeinflussen können. Weiter unten werden konkrete Verschaltungen angegeben.

Wenn das elektronische Vorschaltgerät direkt an die Netzversorgung angeschlossen wird, treten keine wesentlichen Sprünge in der Versorgungsspannung auf. Die Bauteile der Schaltungsanordnung in Figur 9 sind so ausgelegt, dass der Spitzenwert der Spannung über RD über die Diode DS in dem Kondensator CS gespeichert wird und die Spannung über dem Kondensator CS den Transistor T nicht einschalten kann.

Wenn das elektronische Vorschaltgerät über einen Phasenanschnittdimmer an das Versorgungsnetz angeschlossen wird, zeigt die Versorgungsspannung deutliche Sprünge. In diesem Fall treten über dem Widerstand RD hohe Spitzenwerte auf, so dass der Kondensator CS im Vergleich zum Betrieb ohne Phasenanschnittdimmer auf deutlich höhere Werte aufgeladen wird. Die Spannung über dem Kondensator CS kann nun über den Widerstand RS den Transistor T in einen leitenden Zustand versetzen, womit der kollektorseitige Ausgang des Transistors TC ungefähr auf das Bezugspotenzial GND gelegt wird. Über den Ausgang TC des Transistors T kann der Hochsetzsteller angesprochen werden, so dass die Abschaltstromschwelle sinkt.

In Figur 1 wird die Abschaltstromschwelle durch die Widerstände R2 und R3 bestimmt. Wird ein Widerstand über den Schalter T von dem Potenzial am Knoten V7 auf das Bezugspotenzial GND geschaltet, so wird der resultierende Sollwert größer, wenn der Schalter T eingeschaltet ist.

In Figur 3 wird die Abschaltstromschwelle durch die Referenzspannung Vref bestimmt. Die Spannung Vref kann durch eine Spannungsteilerschaltung aus Widerständen erzeugt werden. Zu einem dieser Widerstände kann ein Widerstand über den Schalter T parallel geschaltet werden. Durch Ein- und Ausschalten des Schalters T ändert sich damit die Referenzspannung Vref.

## Patentansprüche

1. Elektronisches Vorschaltgerät für eine Entladungslampe mit einem Hochsetzsteller (L, D1, T1, C2), welcher eine Speicherdrossel (L), eine Diode (D1), einen Zwischenkreiskondensator (C2) und ein Schaltelement (T1) aufweist,
wobei es dazu ausgelegt ist, das Schaltelement (T1) im Hochsetzsteller (L, D1, T1, C2) beim Erreichen eines maximalen Stromwertes des durch das Schaltelement (T1) fließenden Stromes auszuschalten,
und dass es eine Halteschaltung (HS) mit einem Zeitglied (R27, C23) aufweist,
welche dazu ausgelegt ist,
das Zeitglied (R27, C23) bei einem Ausschalten des Schaltelementes (T1) zu setzen, und
das Schaltelement (T1) einzuschalten, wenn eine durch das Zeitglied (R27, C23) bestimmte Zeit abgelaufen ist
wobei das elektronische Vorschaltgerät ferner dazu ausgelegt ist, im Anschluss an die Abmagnetisierung der Speicherdrossel (L), durch ein Abmagnetisierungssignal, nämlich einen Sprung des Potenziales zwischen der Speicherdrossel (L) und der Diode (D1) im Anschluss an die Abmagnetisierung der Speicherdrossel (L), das Schaltelement (T1) einzuschalten.
wobei
die Halteschaltung (HS) aufweist:
ein Schwellwertelement (AMP2) zum Schalten des Schaltelementes (T1) und zum Setzen des Zeitgliedes (R27, C23),
wobei ein dem Strom durch das Schaltelement (T1) entsprechendes Signal einem Steuereingang (V24) des Schwellwertelementes (AMP2) zugeführt wird,
und wobei die Halteschaltung (HS) dazu ausgelegt ist,
beim Erreichen des durch den Schwellwert des Schwellwertelementes (AMP2) bestimmten maximalen Stromes durch das Schaltelement (T1) das Schaltelement (T1) über das Schwellwertelement (AMP2) auszuschalten und
das Zeitglied (R27, C23) über das Schwellwertelement (AMP2) zu setzen.

2. Elektronisches Vorschaltgerät nach Anspruch 1, bei dem die Halteschaltung (HS) aufweist:
einen Halteschalter (T22),
einen ersten Spannungsteiler (R25, R28) mit zwei Impedanzen (R25, R28), dessen Mittenabgriff (V24) mit dem Steuereingang (V24) des Schwellwertelementes (AMP2) verbunden ist,
wobei die Schaltstrecke des Halteschalters (T22) und der Spannungsteiler (R25, R28) in Serie geschaltet sind,
wobei die Halteschaltung (HS) dazu ausgelegt ist,
den Halteschalter (T22) beim Erreichen des maximalen Stromes durch das Schaltelement (T1) über das Schwellwertelement (AMP2) einzuschalten, so dass ein Strom durch den ersten Spannungsteiler (R25, R28) fließt, und
das Potenzial an dem Steuereingang (V24) des Schwellwertelementes (AMP2) über den Mittenabgriff (V24) des ersten Spannungsteilers (R25, R28) so eingestellt wird, dass das Schaltelement (T1) ausgeschaltet bleibt.

3. Elektronisches Vorschaltgerät nach Anspruch 1 oder 2, bei dem die Halteschaltung (HS) aufweist:
einen zweiten Spannungsteiler (R24, R28) mit zwei Impedanzen (R24, R28), dessen Mittenabgriff (V24) mit dem Steuereingang (V24) des Schwellwertelementes (AMP2) verbunden ist,
welche Halteschaltung (HS) dazu ausgelegt ist,
durch das Abmagnetisierungssignal das Potenzial an dem Steuereingang (V24) des Schwellwertelements (AMP2) über den zweiten Spannungsteiler (R24, R28) so einzustellen, dass das Schaltelement (T1) durch das Schwellwertelement (AMP2) eingeschaltet wird.

4. Elektronisches Vorschaltgerät nach Anspruch 2 und 3, bei dem die Halteschaltung (HS) eine Trenndiode (D22) aufweist, welche zwischen die beiden Impedanzen (R25, R28) des ersten Spannungsteiler geschaltet ist und die auch zwischen den Steuereingang (V24) des Schwellwertelementes (AMP2) und die dem Halteschalter (T22) zugewandt geschaltete Impedanz (R25) geschaltet ist, wobei das elektronische Vorschaltgerät dazu ausgelegt ist,
reagierend auf das Abmagnetisierungssignal einen Verbindungsknoten (V22) zwischen der Trenndiode (D22) und der dem Halteschalter (T22) zugewandt geschalteten Impedanz (R24) eine Potenzialverschiebung erfahren zu lassen, so dass die Trenndiode (D22) sperrt, und
das Potenzial (V24) an dem Steuereingang des Schwellwertelements (AMP2) über den zweiten Spannungsteiler (R24, R28) so einzustellen, dass das Schaltelement (T1) durch das Schwellwertelement (AMP2) eingeschaltet wird.

5. Elektronisches Vorschaltgerät nach Anspruch 2 und einem der vorangehenden Ansprüche bei dem die Halteschaltung (HS) aufweist:
einen zweiten Spannungstreiber (R24, R28) mit zwei Impedanzen (R24, R25), dessen Mittenabgriff (V24) mit dem Steuereingang (V24) des Schwellwertelementes (AMP2) verbunden ist und bei dem die Halteschaltung dazu ausgelegt ist,
den Halteschalter (T22) auszuschalten, sobald die durch das Zeitglied (R27, C23) bestimmte Zeit abgelaufen ist und
das Potenzial an dem Steuereingang (V24) des Schwellwertelements (AMP2) über den zweiten Spannungsteiler (R24, R28) so einzustellen, dass das Schaltelement (T1) durch das Schwellwertelement (AMP2) eingeschaltet wird.

6. Elektronisches Vorschaltgerät nach Anspruch 4, mit einem Transistor (T21), dessen Schaltstrecke zwischen den Verbindungsknoten (V22) zwischen der dem Halteschalter (T22) zugewandten Impedanz (R25) des ersten Spannungsteilers (R25, R28) und der Trenndiode (D22) und das Bezugspotenzial (GND) geschaltet ist und welcher über seinen Steuereingang durch das Abmagnetisierungssignal eingeschaltet wird, so dass das Potenzial an dem Verbindungsknoten (V22) eine Potenzialverschiebung erfährt und die Trenndiode (D22) sperrt.

7. Elektronisches Vorschaltgerät nach Anspruch 2 und einem der vorangehenden Ansprüche, bei dem die Halteschaltung (HS) eine Trenndiode (D22) aufweist, welche zwischen die beiden Impedanzen (R25, R28) des ersten Spannungsteilers geschaltet ist und die auch zwischen den Steuereingang (V24) des Schwellwertelements (AMP2) und die dem Halteschalter (T22) zugewandt geschaltete Impedanz (R25) geschaltet ist, mit einer ersten Signalleitung (IS1), welche den Steuereingang (V24) des Schwellwertelementes (AMP2) mit einer Steuervorrichtung des elektronischen Vorschaltgerätes über die Trenndiode (D22) verbindet, so dass die Steuervorrichtung das Schaltelement (T1) über die erste Signalleitung (IS1) einschalten kann.

8. Elektronisches Vorschaltgerät nach einem der vorigen Ansprüche, mit einer zweiten Signalleitung (FF), welche den Steuereingang (V24) des Schwellwertelementes (AMP2) mit einer Steuervorrichtung des elektronischen Vorschaltgerätes verbindet, wobei die Steuervorrichtung dazu ausgelegt ist, diesem eine modulierende Spannung zuzuführen.

9. Elektronisches Vorschaltgerät nach Anspruch 8, bei dem die Steuervorrichtung des elektronischen Vorschaltgerätes dazu ausgelegt ist, dem Steuereingang (V24) des Schwellwertelementes (AMP2) über die zweite Signalleitung (FF) eine zu dem Momentanwert der Spannung der Versorgung (AC) proportionale Spannung zuzuführen.

10. Elektronisches Vorschaltgerät nach einem der vorangehenden Ansprüche mit einer vierten Signalleitung (IS2), welche einen Steuereingang (V7) eines Schwellwertelementes (T2, AMP) und eine Steuerschaltung zur Ansteuerung des Hochsetzstellers (L, D1, T1, C2) verbindet und mit der das Schwellwertelement (T2, AMP) von der Steuerschaltung geschaltet werden kann, so dass die selbsterregte Oszillation des Schaltelementes (T1) anlaufen kann.

11. Elektronisches Vorschaltgerät nach einem der vorangehenden Ansprüche, mit einem Komparator (AMP, AMP2) und einer dem Komparator (AMP, AMP2) nachgeschalteten Treiberschaltung (TS, D) zur Ansteuerung des Schaltelements (T1) im Hochsetzsteller (L, D1, T1, C2), wobei bei dem ein Eingang (V7) des Komparators (AMP) mit dem Potenzial (V2) zwischen der Speicherdrossel (L) und der Diode (D1) über zumindest einen Widerstand (R2) und einen Kondensator (C1) verbunden ist, wobei diesem Widerstand (R2) ein Kondensator (C3) parallel geschaltet ist, so dass der Potenzialsprung des Potenziales (V2) zwischen Speicherdrossel (L) und Diode (D1) im Anschluss an die Abmagnetisierung der Speicherdrossel (L) differentiell auf den Eingang (V7) des Komparators (AMP) übertragen wird.

12. Elektronisches Vorschaltgerät nach Anspruch 11, bei dem einem Eingangssignal (V7) des Komparators (AMP) eine Gleichspannung überlagert ist, so dass der Störabstand zwischen Bezugspotenzial (GND) und diesem Eingangssignal (V7) vergrößert ist.

13. Elektronisches Vorschaltgerät nach einem der Ansprüche 11 oder 12, bei dem dem Komparator (AMP) eine zum Momentanwert der Spannung der Versorgung (AC) proportionale Referenzspannung (Vref) zugeführt ist.

14. Elektronisches Vorschaltgerät nach einem der vorangehenden Ansprüche zum wahlweisen Betrieb einer Entladungslampe direkt an einer Netzversorgung oder an einem Phasenanschnittdimmer, wobei Sprünge in der Versorgungsspannung durch einen zwischen eine der Netzleitungen und das Bezugspotenzial des Vorschaltgerätes angeschlossenen Differenzierer (CD, RD) ausgekoppelt und an eine Steuerung (R2, R3, Vref, Vref2) des Vorschaltgerätes gegeben werden, so dass die Steuerung (R2, R3, Vref, Vref2) zwischen dem Betrieb am Phasenanschnittdimmer und an der Netzversorgung unterscheiden kann.

15. Elektronisches Vorschaltgerät nach Anspruch 14, bei dem die Steuerung (R2, R3, Vref, Vref2) den Hochsetzsteller so steuert, dass dieser beim Betrieb an der Netzversorgung eine geringere Abschaltstromschwelle aufweist, so dass der Hochsetzsteller einen Strom niedrigerer Amplitude aus der Netzversorgung aufnimmt als beim Betrieb an dem Phasenanschnittdimmer.

## Claims

1. Electronic ballast for a discharge lamp with a step-up converter (L, D1, T1, C2), which has a storage inductor (L), a diode (D1), an intermediate circuit capacitor (C2) and a switching element (T1),
it being designed to switch off the switching element (T1) in the step-up converter (L, D1, T1, C2) when a maximum current value of the current flowing through the switching element (T1) is reached,
and in that it has a hold circuit (HS) with a timing element (R27, C23),
which hold circuit is designed
to set the timing element (R27, C23) when the switching element (T1) is switched off, and
to switch on the switching element (T1) if a time determined by the timing element (R27, C23) has elapsed the electronic ballast also being designed to switch on the switching element (T1) after the demagnetization of the storage inductor (L) by means of a demagnetization signal, namely a sudden change in the potential between the storage inductor (L) and the diode (D1) after the demagnetization of the storage inductor (L),
the hold circuit (HS) having:
a threshold value element (AMP2) for switching the switching element (T1) and for setting the timing element (R27, C23),
with a signal, which corresponds to the current through the switching element (T1), being supplied to a control input (V24) of the threshold value element (AMP2),
and with the hold circuit (HS) being designed to switch off the switching element (T1) via the threshold value element (AMP2) when the maximum current through the switching element (T1), which current is determined by the threshold value of the threshold value element (AMP2), is reached and
to set the timing element (R27, C23) via the threshold value element (AMP2).

2. Electronic ballast according to Claim 1, in which the hold circuit (HS) has:
a hold switch (T22),
a first voltage divider (R25, R28) with two impedances (R25, R28), whose center tap (V24) is connected to the control input (V24) of the threshold value element (AMP2),
with the switching path of the hold switch (T22) and the voltage divider (R25, R28) being connected in series,
with the hold circuit (HS) being designed
to switch on the hold switch (T22) via the threshold value element (AMP2) when the maximum current through the switching element (T1) is reached, with the result that a current flows through the first voltage divider (R25, R28), and
the potential at the control input (V24) of the threshold value element (AMP2) being set via the center tap (V24) of the first voltage divider (R25, R28) in such a way that the switching element (T1) remains switched off.

3. Electronic ballast according to Claim 1 or 2, in which the hold circuit (HS) has:
a second voltage divider (R24, R28) with two impedances (R24, R28), whose center tap (V24) is connected to the control input (V24) of the threshold value element (AMP2), which hold circuit (HS) is designed to use the demagnetization signal to set the potential at the control input (V24) of the threshold value element (AMP2) via the second voltage divider (R24, R28) in such a way that the switching element (T1) is switched on by the threshold value element (AMP2).

4. Electronic ballast according to Claims 2 and 3, in which the hold circuit (HS) has an isolating diode (D22), which is connected between the two impedances (R25, R28) of the first voltage divider and which is also connected between the control input (V24) of the threshold value element (AMP2) and the impedance (R25) which is switched so as to face the hold switch (T22), with the electronic ballast being designed
to allow a connecting node (V22) between the isolating diode (D22) and the impedance (R24) which is switched so as to face the hold switch (T22) to experience a potential shift in response to the demagnetization signal, with the result that the isolating diode (D22) turns off, and
to set the potential (V24) at the control input of the threshold value element (AMP2) via the second voltage divider (R24, R28) in such a way that the switching element (T1) is switched on by the threshold value element (AMP2).

5. Electronic ballast according to Claim 2 and one of the preceding claims, in which the hold circuit (HS) has:
a second voltage divider (R24, R28) with two impedances (R24, R25), whose center tap (V24) is connected to the control input (V24) of the threshold value element (AMP2) and in which the hold circuit is designed
to switch off the hold switch (T22) as soon as the time determined by the timing element (R27, C23) has elapsed, and to set the potential at the control input (V24) of the threshold element (AMP2) via the second voltage divider (R24, R28) in such a way that the switching element (T1) is switched on by the threshold value element (AMP2).

6. Electronic ballast according to Claim 4, with a transistor (T21), whose switching path is connected between the connecting node (V22) between the impedance (R25), which faces the hold switch (T22), of the first voltage divider (R25, R28) and the isolating diode (D22) and the reference potential (GND) and which is switched on via its control input by the demagnetization signal, with the result that the potential at the connecting node (V22) experiences a potential shift and the isolating diode (D22) turns off.

7. The electronic ballast according to Claim 2 and one of the preceding claims, in which the hold circuit (HS) has an isolating diode (D22), which is connected between the two impedances (R25, R28) of the first voltage divider and which is also connected between the control input (V24) of the threshold value element (AMP2) and the impedance (R25), which is switched so as to face the hold switch (T22), with a first signal line (IS1), which connects the control input (V24) of the threshold value element (AMP2) to a control apparatus of the electronic ballast via the isolating diode (D22), with the result that the control apparatus can switch on the switching element (T1) via the first signal line (IS1).

8. Electronic ballast according to one of the preceding claims, with a second signal line (FF), which connects the control input (V24) of the threshold value element (AMP2) to a control apparatus of the electronic ballast, with the control apparatus being designed to supply a modulating voltage thereto.

9. Electronic ballast according to Claim 8, in which the control apparatus of the electronic ballast is designed to supply a voltage, which is proportional to the instantaneous value of the voltage of the supply (AC), to the control input (V24) of the threshold value element (AMP2) via the second signal line (FF).

10. Electronic ballast according to one of the preceding claims with a fourth signal line (IS2), which connects a control input (V7) of a threshold value element (T2, AMP) and a control circuit for driving the step-up converter (L, D1, T1, C2) and with which the threshold value element (T2, AMP) can be switched by the control circuit, with the result that the self-excited oscillation of the switching element (T1) can start up.

11. Electronic ballast according to one of the preceding claims, with a comparator (AMP, AMP2) and a driver circuit (TS, D), which is connected downstream of the comparator (AMP, AMP2), for driving the switching element (T1) in the step-up converter (L, D1, T1, C2), an input (V7) of the comparator (AMP) being connected to the potential (V2) between the storage inductor (L) and the diode (D1) via at least one resistor (R2) and a capacitor (C1), with a capacitor (C3) being connected in parallel with said resistor (R2), with the result that the sudden change in potential (V2) between the storage inductor (L) and the diode (D1) after the demagnetization of the storage inductor (L) is transmitted differentially to the input (V7) of the comparator (AMP).

12. Electronic ballast according to Claim 11, in which a DC voltage is superimposed on an input signal (V7) of the comparator (AMP), with the result that the signal-to-noise ratio between the reference potential (GND) and this input signal (V7) is increased.

13. Electronic ballast according to either of Claims 11 and 12, in which a reference voltage (Vref), which is proportional to the instantaneous value of the voltage of the supply (AC), is supplied to the comparator (AMP).

14. Electronic ballast according to one of the preceding claims for the optional operation of a discharge lamp directly on a mains supply or using a phase gating dimmer, with sudden changes in the supply voltage being coupled out by a differentiator (CD, RD), which is connected between one of the mains lines and the reference potential of the ballast, and being fed to a controller (R2, R3, Vref, Vref2) of the ballast, with the result that the controller (R2, R3, Vref, Vref2) can decide between operation using the phase gating dimmer and operation on the mains supply.

15. Electronic ballast according to Claim 14, in which the controller (R2, R3, Vref, Vref2) controls the step-up converter in such a way that said step-up converter, during operation on the mains supply, has a lower gate turn-off current threshold, with the result that the step-up converter draws a current with a lower amplitude from the mains supply than during operation using the phase gating dimmer.

## Revendications

1. Ballast électronique pour une lampe à décharge, comprenant un survolteur ( L, D1, T1, C2 ) qui a une bobine ( L ) accumulatrice, une diode ( D1 ), un condensateur ( C2 ) de circuit intermédiaire et un élément ( T1 ) de commutation,
la conception étant telle que l'élément ( T1 ) de commutation du survolteur ( L, D1, T1, C2 ) est ouvert lorsqu'une valeur maximum du courant passant dans l'élément ( T1 ) de commutation est atteinte,
et en ce qu'il comporte un circuit ( HSZ ) de maintien ayant un élément ( R27, C23 ) de temporisation,
qui est conçu,
pour remettre à l'état initial l'élément ( R27, C23 ) de temporisation lorsque l'élément ( T1 ) de commutation est ouvert et
fermer l'élément ( T1 ) de commutation, lorsqu'une durée déterminée par l'élément de temporisation s'est écoulée,
dans lequel le ballast électronique est conçu, en outre, pour fermer l'élément ( T1 ) de commutation, à la suite de la démagnétisation de la bobine ( L ) accumulatrice, par un signal de démagnétisation, à savoir, un saut du potentiel entre la bobine ( L ) accumulatrice et la diode à la suite de la démagnétisation de la bobine ( L ) accumulatrice,
dans lequel
le circuit ( HS ) de maintien comporte :
un élément ( AMP2 ) à valeur de seuil pour commuter l'élément ( T1 ) de commutation et pour remettre à l'état initial l'élément ( R27, C23 ) de temporisation,
dans lequel un signal correspondant au courant passant dans l'élément ( T1 ) de commutation est envoyé à une entrée ( V24 ) de commande de l'élément ( AMP2 ) à valeur de seuil,
dans lequel le circuit ( HS ) de maintien est conçu pour ouvrir l'élément ( T1 ) de commutation par l'élément ( AMP2 ) à valeur de seuil, lorsque le courant maximum passant dans l'élément ( T1 ) de commutation et déterminé par la valeur de seuil de l'élément ( AMP2 ) à valeur de seuil est atteint et
pour remettre à l'état initial l'élément ( R27, C23 ) de temporisation par l'élément ( AMP2 ) à valeur de seuil.

2. Ballast électronique suivant la revendication 1, dans lequel le circuit ( HS ) de maintien comporte :
un commutateur ( T22 ) de maintien,
un premier diviseur ( R25, R28 ) de tension ayant deux impédances ( R25, R28 ), dont la prise ( V24 ) médiane est reliée à l'entrée ( V24 ) de commande de l'élément ( AMP2 ) à valeur de seuil,
dans lequel la section de commutation du commutateur ( T22 ) de maintien et le diviseur ( R25, R28 ) de tension sont montés en série,
dans lequel le circuit ( HS ) de maintien est conçu pour fermer par l'élément ( AMP2 ) à valeur de seuil le commutateur ( T22 ) de maintien, lorsque le courant maximum passant dans l'élément ( T1 ) de commutation est atteint de manière à ce qu'un courant passe dans le premier diviseur ( R25, R28 ) de tension, et
pour régler le potentiel à l'entrée ( V24 ) de commande de l'élément ( AMP2 ) à valeur de seuil par la prise ( V24 ) médiane du premier diviseur ( R25, R28 ) de tension, de manière à ce que l'élément ( T1 ) de commutation reste ouvert.

3. Ballast électronique suivant la revendication 1 ou 2, dans lequel le circuit ( HS ) de maintien comporte :
un deuxième diviseur ( R24, R28 ) de tension ayant deux impédances ( R24, R28 ), dont la prise ( V24 ) médiane est reliée à l'entrée ( v24 ) de commande de l'élément ( AMP2 ) à valeur de seuil,
ce circuit ( HS ) de maintien étant conçu
pour régler par le signal de démagnétisation le potentiel à l'entrée ( V24 ) de commande de l'élément ( AMP2 ) à valeur de seuil par le deuxième diviseur ( R24, R28 ) de tension de manière à ce que l'élément ( T1 ) de commutation soit fermé par l'élément ( AMP2 ) à valeur de seuil.

4. Ballast électronique suivant la revendication 2 et 3, dans lequel le circuit ( HS ) de maintien comporte une diode ( D22 ) de séparation, qui est montée entre les deux impédances ( R25, R28 ) du premier diviseur de tension et qui est montée aussi entre l'entrée ( V24 ) de commande de l'élément ( AMP2 ) à valeur de seuil et l'impédance ( R25 ) montée du côté du commutateur ( T22 ) de maintien, le ballast électronique étant conçu,
Pour, en réaction au signal de démagnétisation, faire subir un décalage de potentiel à un noeud ( V22 ) de liaison entre la diode ( D22 ) de séparation et l'impédance ( R24 ) montée du côté du commutateur ( D22 ) de maintien de manière à ce que la diode ( D22 ) de séparation bloque, et
pour régler le potentiel ( V24 ) à l'entrée de commande de l'élément ( AMP2 ) de valeur de seuil, par le deuxième diviseur ( R24, R28 ) de tension, de manière à fermer l'élément ( T1 ) de commutation par l'élément ( AMP2 ) à valeur de seuil.

5. Ballast électronique suivant la revendication 2 et l'une des revendications précédentes, dans lequel le circuit ( HS ) de maintien comporte :
un deuxième diviseur ( R24, R28 ) de tension ayant deux impédances ( R24, R25 ), dont la prise ( V24 ) médiane est reliée à l'entrée ( V24 ) de commande de l'élément ( AMP2 ) à valeur de seuil et dans lequel le circuit de maintien est conçu
pour ouvrir l'interrupteur ( T22 ) de maintien dès que la durée déterminée par l'élément ( R25, C23 ) de temporisation s'est écoulée et
pour régler le potentiel à l'entrée ( V24 ) de commande de l'élément ( AMP2 ) à valeur de seuil par le deuxième diviseur ( R24, R28 ) de tension, de manière à fermer l'élément ( T1 ) de commutation par l'élément ( AMP2 ) à valeur de seuil.

6. Ballast électronique suivant la revendication 4, comprenant un transistor ( T21 ), dont la section de commutation est monté entre le noeud ( V22 ) de liaison, entre l'impédance ( R25 ), tournée vers le commutateur ( T22 ) de maintien, du premier diviseur ( R25, R28 ) de tension et la diode ( D22 ) de séparation, et le potentiel ( GND ) de référence et qui est mis en circuit par le signal de démagnétisation par son entrée de commande de sorte que le potentiel sur le noeud ( V22 ) de liaison subit un décalage de potentiel et que la diode ( D22 ), de séparation bloque.

7. Ballast électronique suivant la revendication 2 et l'une des revendications précédentes, dans lequel le circuit ( HS ) de maintien comporte une diode ( D22 ) de séparation, qui est montée entre les deux impédances ( R25, R28 ) du premier diviseur de tension et qui est montée aussi entre l'entrée ( V24 ) de commande de l'élément ( AMP2 ) à valeur de seuil et l'impédance ( R25 ) montée tournée vers le commutateur ( T22 ) de maintien, comprenant une première ligne ( IS1 ) de signal, qui relie l'entrée ( V24 ) de commande de l'élément ( AMP2 ) à valeur de seuil à un dispositif de commande du ballast électronique par l'intermédiaire de la diode ( D22 ) de séparation de sorte que le dispositif de commande peut fermer l'élément ( T1 ) de commutation par la première ligne ( IS1 ) de signal.

8. Ballast électronique suivant l'une des revendications précédentes, comprenant une deuxième ligne ( FF ) de signal, qui relie l'entrée ( V24 ) de commande de l'élément ( AMP2 ) à valeur de seuil à un dispositif de commande du ballast électronique, le dispositif de commande étant conçu pour envoyer à ce ballast une tension de modulation.

9. Ballast électronique suivant la revendication 8, dans lequel le dispositif de commande du ballast électronique est conçu pour envoyer à l'entrée ( V24 ) de commande de l'élément ( AMP2 ) à valeur de seuil, par l'intermédiaire de la deuxième ligne ( FF ) de signal, une tension proportionnelle à la valeur instantanée de la tension de l'alimentation ( AC ).

10. Ballast électronique suivant l'une des revendications précédentes, comprenant une quatrième ligne ( IS2 ) de signal, qui relie une entrée ( V7 ) de commande d'un élément ( T2, AMP ) à valeur de seuil et un circuit de commande pour commander le survolteur ( L, D1, T1, C2 ) et par laquelle l'élément ( T2, AMP ) à valeur de seuil peut être mis en circuit par le circuit de commande de sorte que l'oscillation autoexcitée de l'élément ( T1 ) de commutation peut commencer.

11. Ballast électronique suivant la revendication suivant l'une des revendications précédentes, comprenant un comparateur ( AMP, AMP2 ) et un circuit ( TS, D ) d'attaque monté en aval du comparateur ( AMP, AMP2 ) pour commander l'élément ( T1 ) de commutation du survolteur ( L, D1, T1, C2 ), dans lequel une entrée ( V7 ) du comparateur ( AMP ) est reliée au potentiel ( V2 ) entre la bobine ( L ) et la diode ( D1 ) par l'intermédiaire d'au moins une résistance ( R2 ) et un condensateur ( C1 )
dans lequel un condensateur ( C3 ) est monté en parallèle à cette résistance ( R2 ) de sorte que le saut du potentiel ( V2 ) entre la bobine ( L1 ) accumulatrice et la diode ( D1 ) à la suite de la démagnétisation de la bobine ( L1 ) accumulatrice est transmis différentiellement à l'entrée ( V7 ) du comparateur ( AMP ).

12. Ballast électronique suivant la revendication 11, dans lequel une tension continue est superposée à un signal ( V7 ) d'entrée du comparateur ( AMP ) de manière à agrandir le rapport signal bruit entre le potentiel ( GND ) de référence et ce signal ( V7 ) d'entrée.

13. Ballast électronique suivant l'une des revendications 11 ou 12, dans lequel une tension ( Vref ) de référence, proportionnelle à la valeur instantanée de la tension de l'alimentation ( AC ), est appliquée au comparateur ( AMP ).

14. Ballast électronique suivant l'une des revendications, pour faire fonctionner au choix une lampe à décharge directement sur l'alimentation du secteur ou sur un variateur à réglage de l'angle de phase, les sauts de la tension d'alimentation étant éliminés par un différenciateur ( CD, RD ) monté entre l'une des ligne du secteur et le potentiel de référence du ballast et étant donnés à une commande ( R2, R3, Vref, Vref2 ) du ballast de sorte que la commande ( R2, R3, Vref, Vref2 ) peut distinguer entre le fonctionnement sur le variateur à réglage de l'angle de phase et l'alimentation par le secteur.

15. Ballast électronique suivant la revendication 14, dans lequel la commande ( R2, R3, Vref, Vref2 ) commande le commutateur de manière à ce que celui-ci ait, lors du fonctionnement sur l'alimentation par le secteur, un seuil d'arrêt du courant plus petit, de sorte que le survolteur absorbe un courant d'amplitude plus petite de l'alimentation par le secteur que lors du fonctionnement sur le variateur à réglage de l'angle de phase.
